# EUROPÄISCHE PATENTSCHRIFT

(11) **EP 3 559 134 B1**
(45) Veröffentlichungstag und Bekanntmachung des Hinweises auf die Patenterteilung: **29.04.2020**
(21) Anmeldenummer: 17804200.8
(22) Anmeldetag: 27.11.2017
(51) Int. Cl.: C09D 183/14, C08L 83/04, C08G 77/38

(54) **HERSTELLUNG VERNETZUNGSFÄHIGER HOCHMOLEKULARER SILICONHARZE**
PRODUCTION OF CROSSLINKABLE HIGH-MOLECULAR SILICON RESINS
FABRICATION DE RÉSINES DE SILICONE RÉTICULABLES À HAUTE MASSE MOLÉCULAIRE

(43) Veröffentlichungstag der Anmeldung: 30.10.2019
(73) Patentinhaber: Wacker Chemie AG, 81737 München (DE)
(72) Erfinder: SANDMEYER, Frank, 84508 Burgkirchen (DE); HELDMANN, Dieter, 84489 Burghausen (DE)
(74) Vertreter: Deffner-Lehner, Maria
(86) Internationale Anmeldenummer: PCT/EP2017/080556
(87) Internationale Veröffentlichungsnummer: WO 2019/101349

(56) Entgegenhaltungen:
- US-A- 4 749 764

## Beschreibung

Die Erfindung betrifft ein Verfahren zur Herstellung von lagerstabilen, vernetzungsfähigen hochmolekularen Siliconharzen durch die Umsetzung mindestens zweier verschiedener Siliconharzoligomeren, die Alkoxygruppen und ggf. auch Hydroxylgruppen enthalten, durch Copolymerisation mit einem mehrwertigen niedermolekularen Alkohol, sowie deren Anwendung zur Herstellung von hitzefesten, korrosionsschützenden Beschichtungen.

### Stand der Technik:

Verfahren zur Herstellung von vernetzungsfähigen Organopolysiloxanharzen sind aus zahlreichen Publikationen und Patentschriften bekannt.

US 4,899,772 A lehrt kondensationsvernetzende Zubereitungen für abhäsive Beschichtungen, die aus einem reaktiven vernetzten und einem reaktiven linearen Polyorganosiloxan bestehen. Das reaktive vernetzte Polyorganosiloxan wird erhalten, indem ein alkoxyfunktionelles, silanolfreies vernetztes Polyorganosiloxan mit einem mehrwertigen Alkohol in Gegenwart eines Umesterungskatalysators bei einer Temperatur von 100 bis 160°C in der Weise umgesetzt wird, dass das molare Verhältnis von Si-gebundenen Alkoxygruppen zu Carbinolgruppen des mehrwertigen Alkohols von 0,8:1 bis 1,2:1 gewählt, die Umsetzung bis zu einem Umsetzungsgrad von 25% bis 90% getrieben und dann abgebrochen wird, indem unter 100°C abgekühlt wird. Bei den mehrwertigen Alkoholen handelt es sich dabei um Polyesterpolyole, d.h. Estergruppen enthaltende Polyole, die durch Umsetzung von 1 Mol aliphatischer, cycloaliphatischer oder aromatischer Dicarbonsäure mit 2 Mol eines mindestens zweiwertigen Alkohols erhalten werden.

EP 0017958 A1 lehrt kondensationsvernetzende Zubereitungen für abhäsive Beschichtungen, die aus einem reaktiven vernetzten und einem reaktiven linearen Polyorganosiloxan bestehen, wobei die relativen Mengen linearer zu vernetzter Polyorganosiloxan sich von denen aus US 4,899,772 A unterscheiden. Die kondensationsfähigen Zubereitungen nach EP 0017958 A1 bestehen überwiegend aus dem hitzehärtbaren Siliconharz neben 0,05 bis 4% des linearen Polyorganosiloxans.

In diesen Fällen basieren die beschriebenen Zubereitungen auf der Kombination aus zwei strukturell unterschiedlichen Siloxankomponenten, nämlich einer linearen und einer vernetzten. Dieser Aspekt wird in EP 0679677 A2, US 7,118,619 B2 und US 4,452,961 A noch weiter ausgeführt, indem anstelle ausgedehnter vorgeformter vernetzter Siliconharze Trialkoxysilane eingesetzt werden, bzw. indem alkoxyfunktionelle Alkoxysiloxane, die zu mindestens 50% aus cyclischen Monoorganoalkoxysiloxanen mit 3 bis 8 Siloxanwiederholungseinheiten bestehen, eingesetzt werden. In keinem Fall ist die Verwendung ausschließlich vernetzter Siloxanspezies zur Erzeugung der Zubereitungen beschrieben. Zum anderen ist es kennzeichnend für die zitierten Patentschriften, dass nur bestimmte Polyol-COH: Siloxan-SiOR-Verhältnisse und daran gekoppelt nur bestimmte Umsetzungsgrade zugelassen sind. Dies erfordert eine stringente Reaktionskontrolle und macht die Verfahren begrenzt robust.

Ausschließlich vernetzte bzw. vernetzbare Siloxankomponenten als Edukte werden in US 4,749,764 A verwendet. US 4,749,764 A beschreibt ein Verfahren zur Herstellung von hitzehärtbaren Siliconharzen. Sie werden erhalten, indem man alkoxyfunktionelle vernetzbare Polyorganosiloxane, die aus Chlorsilanvorstufen durch Hydrolyse und Kondensation hergestellt werden, mit mindestens zweiwertigen Alkoholen umsetzt. Der in den Beispielen bevorzugte Alkohol ist Trimethylolpropan. Im Gegensatz zu US 4,899,772 A sind hier keine linearen Polyorganosiloxankomponenten beteiligt. Das Verfahren und die Reaktionsbedingungen zur Herstellung der polyolveretzten Polyorganosiloxankomponente entsprechen im Wesentlichen dem in US 4,899,772 A beschriebenen. Im Detail wird das reaktive vernetzte Polyorganosiloxan gemäß
US 4,749,764 A erhalten, indem ein alkoxyfunktionelles, silanolfreies vernetztes Polyorganosiloxan mit einem mehrwertigen Alkohol in Gegenwart eines Umesterungskatalysators bei einer Temperatur von 100°C bis 160°C in der Weise umgesetzt wird, dass das molare Verhältnis von Si-gebundenen Alkoxygruppen zu Carbinolgruppen des mehrwertigen Alkohols von etwa eins gewählt wird, die Umsetzung bis zu einem Umsetzungsgrad von 25% bis 80% getrieben und dann abgebrochen wird, indem unter 100°C abgekühlt wird. Die Siliconharze gemäß US 4,749,764 A weisen gegenüber dem damaligen Stand der Technik den Vorteil eines einfacheren Verfahrens und verbesserte Lagerstabilität der nicht ausgehärteten Harze bei gleichzeitig vergleichsweise höherer Härtungsgeschwindigkeit auf, Eigenschaften die sich insbesondere bei rein vernetzbaren Zubereitungen prinzipiell gegenseitig ausschließen und daher schwierig zu realisieren sind.

Die vernetzbaren Polyorganosiloxane gemäß US 4,749,764 A bilden zwar klebfreie Filme, jedoch liegt zwischen der reinen in US 4,749,764 A beschriebenen Trocknung, also Verdunstung des Lösemittels und der reaktivitätsbedingten tatsächlichen Ausbildung eines klebfreien Films (touch dry Zeit) eine erhebliche Zeitspanne, die nicht praxistauglich ist. Außerdem ist der erhaltene Film nicht glatt, sondern weist erhebliche Oberflächenverlaufsstörungen auf, was in der Lackpraxis zwar durch den Einsatz von Verlaufsadditiven kompensiert werden kann, jedoch einen erhöhten Formulierungsaufwand nach sich zieht.

Da vernetzbare Polyorganosiloxane aus ausschließlich vernetzten Vorstufen grundsätzlich dazu geeignet sein sollten, härtere und weniger thermoplastische Beschichtungen zu ergeben, als Zubereitungen, die einen Anteil an linearen oder cyclischen Polyorganosiloxanen aufweisen, die dem Fachmann als weichmachende Polyorganosiloxane bekannt sind, bestand die Aufgabe der vorliegenden Erfindung darin, die Nachteile des Standes der Technik zu überwinden und vernetzbare Polyorganosiloxanen bereitzustellen, die eine gute Lagerfähigkeit bei einer gleichzeitig hohen Reaktivität aufweisen und mit denen harte, korrosionsschützende Überzüge, die bei Temperaturen zwischen 10°C und 25°C rasch härten und zu klebfreien, glatten Überzügen führen, erhalten werden. Die Aufgabe wird durch die Erfindung gelöst.

Gegenstand der Erfindung ist ein Verfahren zur Herstellung von vernetzbaren Siliconharzen, indem in einem ersten Schritt ein Gemisch aus mindestens zwei verschiedenen Siliconharzintermediaten (A), die Si-gebundene Alkoxygruppen und ggf. Hydroxygruppen aufweisen, aus Wiederholungseinheiten der Formel (1)

RₐSi(OR¹)_{b}O_{(4-a-b)/2} (1),

wobei
- R: gleich oder verschieden ist und einen einwertigen, SiC-gebundenen, gegebenenfalls substituierten C₁-C₂₀ Kohlenwasserstoffrest bedeutet,
- R¹: gleich oder verschieden ist und ein Wasserstoffatom oder einen Rest R² bedeutet,
- R²: gleich oder verschiedenen ist und einen einwertigen C₁-C₆-Alkylrest bedeutet,
- a und b: jeweils eine Zahl im Werte von 0, 1, 2 oder 3 je Wiederholungseinheit haben, mit der Maßgabe, dass die Summe a + b ≤ 3 ist und
- a: in mindestens 30 % aller Wiederholungseinheiten der Formel (1) den Wert 1 besitzt und a über alle Wiederholungseinheiten der Formel (1) gemittelt durchschnittlich einen Wert von 0,9 bis 1,9 besitzt und
- b: über alle Wiederholungseinheiten der allgemeinen Formel (1) gemittelt einen durchschnittlichen Wert von 0,1 bis 1,8, besitzt,
wobei die Siliconharzintermediate (A) höchstens 10 Gew.-% Si-gebundene Hydroxylgruppen enthalten, und
wobei die Siliconharzintermediate ein Molekulargewicht M_{w} von 600 bis 2.500 g/mol aufweisen,
miteinander in Gegenwart von Wasser (B),
einer der Mischung Azidität verleihenden Menge eines sauren Katalysators (C) und
ggf. eines Alkohols (D) der Formel R²OH, wobei R² die oben dafür angegebene Bedeutung hat, als Lösemittel
durch Hydrolyse und Kondensation soweit umgesetzt werden, dass die Menge an ursprünglich vorhandenen Gruppen -OR¹ um mindestens 5% reduziert wird, vorzugsweise um mindestens 7%, bevorzugt um mindestens 9%, insbesondere um mindestens 12%, reduziert wird, und der entstehende Alkohol aus dem Reaktionsgemisch vorzugsweise abdestilliert wird, wobei Siliconharze (E) aus Wiederholungseinheiten der Formel (2)

R_{c}Si(OR¹)_{d}O_{(4-c-d)/2} (2),

erhalten werden, wobei
- R und R¹: die oben dafür angegebene Bedeutung haben und
- c und d: jeweils eine Zahl im Werte von 0, 1, 2 oder 3 je Wiederholungseinheit haben, mit der Maßgabe, dass die Summe c + d ≤ 3 ist und
- c: in mindestens 30 % aller Wiederholungseinheiten der Formel (1) den Wert 1 besitzt und c über alle Wiederholungseinheiten der Formel (1) gemittelt durchschnittlich einen Wert von 0,9 bis 1,9 besitzt und
- d: über alle Wiederholungseinheiten der allgemeinen Formel (1) gemittelt einen durchschnittlichen Wert von 0,05 bis 1,0, besitzt,
wobei die Siliconharze (E) höchstens 7 Gew.-% Si-gebundene Hydroxylgruppen enthalten, und
wobei die Siliconharze (E) ein Molekulargewicht M_{w} von mehr als 2.500 g/mol und höchstens 10.000 g/mol aufweisen, mit der Maßgabe, dass die Siliconharze (E) mindestens das 1,5-fache des Molekulargewichtes M_{w} der Siliconharzintermediate (A) aufweisen,
und in einem zweiten Schritt
die im ersten Schritt erhaltenen Siliconharze (E)
mit mehrwertigen, mindestens drei C-gebundenen OH-Gruppen tragenden Alkoholen (F)
in Gegenwart von Wasser (G),
einer der Mischung Azidität verleihenden Menge eines sauren Katalysators (H) und
ggf. von inerten Lösungsmitteln (J)
weiter aufkondensiert werden, und der entstehende Alkohol aus dem Reaktionsgemisch vorzugsweise abdestilliert wird,
mit der Maßgabe, dass die harzgebundenen Alkoxygruppen (Si-OR¹) in (E) gegenüber den kohlenstoffgebundenen OH-Gruppen (COH) in (F) im überstöchiometrischen Verhältnis von Si-OR¹ : COH von mindestens 2,0 : 1 vorliegen und wobei
Siliconharze (K) erhalten werden, die ein Molekulargewicht M_{w} von 5,000 g/mol bis 50,000 g/mol aufweisen, mit der Maßgabe, dass die Siliconharze (K) mindestens das 1,2-fache des Molekulargewichtes M_{w} der Siliconharze (E) aus dem ersten Verfahrensschritt aufweisen,
wobei das Molekulargewicht Mw (Gewichtsmittel) jeweils durch Gelpermeationschromatographie bestimmt wird, und wobei im Siliconharz (K) 0,01 - 3 Gew.-% aller Reste Si-O-gebundene Reste sind, die von dem mehrwertigen Alkohol (F) in gebundener Form stammen,
3 - 10 Gew.-% aller Si-gebundenen Reste im Siliconharz (K) einen Rest -OR² bedeuten, wobei R² einen C₁-C₆-Alkylrest bedeutet, und
wobei die Siliconharze (K) höchstens 5 Gew.-% Hydroxylgruppen enthalten.

Überraschender Weise und im Gegensatz zu US 4,749,764 A wurde gefunden, dass in einem zweistufigen Verfahren die Herstellung von löslichen lagerstabilen vernetzungsfähigen hochmolekularen Siliconharzen mit einem Molekulargewicht Mw von über 3000 g/mol gelingt, die die geforderten Eigenschaften erfüllen, wobei beim erfindungsgemäßen Verfahren im ersten Schritt Si-gebundene Alkoxygruppen und ggf. Silanolgruppen aufweisende vernetzte Siliconharzoligomere oder Gemische derselben ggf. in einem organischen Prozesslösemittel umgesetzt werden und in einem zweiten Reaktionsschritt das Reaktionsprodukt aus dem ersten Reaktionsschritt mit einem organischen Polyol zu einem erfindungsgemäßen hochmolekularen Siliconharz umgesetzt wird, wobei die Umsetzung jeweils mit einer der Reaktionszubereitung Azidität verleihenden Menge eines sauren Kondensationskatalysators und Wasser erfolgt. Das erfindungsgemäße Verfahren unterscheidet sich vom Verfahren gemäß US 4,749,764 A in der Verwendung einer Mischung von mindestens zwei verschiedenen alkoxyfunktionellen Oligomeren anstelle von nur einem solchen Oligomer gemäß US 4,749,764 A und es werden beim erfindungsgemäßen Verfahren geringere Mengen des multifunktionellen Alkohols verwendet, das heißt ein SiOR : COH-Verhältnis von > 2. Durch diese Unterschiede im Verfahren wird eine gegenüber dem Stand der Technik überraschend signifikante Erhöhung der Geschwindigkeit erreicht, mit der sich klebfreie, glatte Überzüge erhalten lassen.

Beim ersten Verfahrensschritt wird der Umsatz vorzugsweise durch Gleichgewichtsverlagerung im erforderlichen Maße vorangetrieben, gleichzeitig aber ein Gelieren durch übermäßige Kondensation vermieden.

Die Menge Wasser (B), die im ersten Verfahrensschritt verwendet wird, wird stöchiometrisch so gewählt, dass sie ausreichend ist, um die gewünschte Menge an Gruppen -OR² zu hydrolysieren. Es ist dabei aus Gründen der Einfachheit des Prozesses und des Recyclings der Destillate bevorzugt, dass nur eine Sorte von Resten -OR² vorhanden ist, wobei das Verfahren auch dann funktioniert, wenn verschiedene Reste -OR² an den Siliconharzintermediaten vorhanden sind. Es ist weiterhin aus den gleichen Gründen bevorzugt, dass nur ein Alkohol R²OH verwendet wird, dessen Rest R² identisch ist mit dem Rest R² der an den Siliconharzintermediaten gebundenen R²O-Gruppen.

Es ist allerdings grundsätzlich möglich mehrere verschiedene Alkohole R²OH zu verwenden, ggf. mit Resten R², die von dem oder den Resten R² der Si-gebundenen Reste -OR² verschieden sind, wobei eine Voraussetzung für die Auswahl des oder der Alkohole R²OH darin besteht, dass sie das oder ggf. die Siliconharzintermediate vollständig lösen. Da die aus einer Alkoholmischung mit höherer Wahrscheinlichkeit resultierende verminderte Recyclingrate der Destillate das Verfahren verteuert, sind solche Varianten zwar denkbar und technisch möglich aber nicht bevorzugt.

Die Si-gebundenen Alkoxygruppen- und ggf. Hydroxygruppen tragende Siliconharzintermediate aus Wiederholungseinheiten der Formel (1) werden nach Hydrolyse und Kondensationsverfahren gemäß Stand der Technik aus Chlorsilanvorstufen, Alkoxysilanvorstufen oder Gemischen derselben hergestellt. Beispielhaft sei hier auf das Verfahren gemäß US 2006/0167297 A1 verwiesen.

Der der Mischung Azidität verleihende Katalysator (C) wird vorzugsweise so gewählt, dass er sich unter den Bedingungen der Destillation nicht zersetzt, allerdings flüchtig ist, so dass er bei diesem Vorgang teilweise destillativ entfernt wird, Reste in der Reaktionsmischung allerdings aktiv bleiben.

Bevorzugt ist, dass ein Gemisch von 2 verschiedenen Siliconharzintermediates der Formel (1) eingesetzt wird. Sie können sich hinsichtlich des Substitutionsmusters, also beispielsweise hinsichtlich der Art und Menge der Reste R, wie der Methyl- oder Phenylgruppen, oder in der Art und Anzahl der funktionellen Gruppen -OR², wie der Methoxy- oder Ethoxygruppen, unterscheiden. Sie können sich dadurch auch im Molekulargewicht und der Viskosität unterscheiden, was aber nur die Folge der unterschiedlichen Zusammensetzung ist.

In Formel (1) hat a vorzugsweise in mindestens 40% und bevorzugt in mindestens 50% aller Wiederholungseinheiten der Formel (1) den Wert 1 und kann den Wert 1 auch in 100% aller Wiederholungseinheiten der Formel (1) haben, wobei a über alle Wiederholungseinheiten der Formel(1) gemittelt durchschnittlich einen Wert von vorzugsweise 0,95 bis 1,9 und bevorzugt einen Wert von 1,0 bis 1,8 besitzt und wobei a = 1 und a = 2 besonders bevorzugt Werte für a in den Wiederholungseinheiten der Formel (1) sind, und
b hat über alle Wiederholungseinheiten der allgemeinen Formel (1) gemittelt einen durchschnittlichen Wert von vorzugsweise von 0,15 bis 1,6 und bevorzugt von 0,20 bis 1,5,
wobei in den Siliconharzintermediaten aus Wiederholungseinheiten der Formel (1) der Rest -OR² vorzugsweise zu höchstens 8 Gew.-%, bevorzugt zu höchstens 5 Gew.-%, insbesondere zu höchstens 3 Gew.-%, Hydroxylgruppen bedeutet. Silanolgruppen müssen in den Siliconintermediaten aus Wiederholungseinheiten der Formel (1) nicht zwingend vorhanden sein. Sie entstehen während der Reaktion durch Hydrolyse der notwendigerweise vorhandenen Alkoxygruppen.

Ausgewählte Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Alkenylreste wie der Vinylrest, Arylreste, wie der Phenyl-, Naphthyl-, Anthryl- und Phenanthrylrest, Alkarylreste, wie Tolylreste, Xylylreste und Ethylphenylreste, und Aralkylreste, wie der Benzylrest, der α- und der β-Phenylethylrest, wobei diese Aufzählung nicht limitierend zu verstehen ist.

Bei Rest R handelt es sich bevorzugt um unsubstituierte Kohlenwasserstoffreste mit 1 bis 12 Kohlenstoffatomen, besonders bevorzugt um den Methyl-, Ethyl- und n-Propylrest und Phenylrest, insbesondere um den Methyl-, n-Propyl- und Phenylrest.

Beispiele für Kohlenwasserstoffrest R² sind die für R angegebenen Reste, wobei es sich bei Rest R² bevorzugt um ein Wasserstoffatom oder einen Kohlenwasserstoffrest mit 1 bis 6 Kohlenstoffatomen, bevorzugt um ein Wasserstoffatom, den Methyl- oder Ethylrest handelt, insbesondere um den Methylrest handelt, wobei diese Aufzählung nicht limitierend zu verstehen ist.

Beispiele für als saure Katalysatoren (C) einsetzbare Säuren sind vorzugsweise Mineralsäuren wie Salzsäure, Salpetersäure oder Phosphorsäure, wobei Salzsäure aufgrund ihrer Flüchtigkeit besonders bevorzugt ist, Polysäuren wie Polyphosphorsäure, und Polyvinylschwefelsaüre oder es können auch vorzugsweise Carbonsäuren wie Ameisensäure, Essigsäure, Propionsäure, Oxalsäure, Malonsäure, Bernsteinsäure, Adipinsäure, Benzoesäure, Phthalsäure, Zitronensäure verwendet werden. Die sauren Katalysatoren (C) werden in Mengen von 1 Gew.-ppm bis 1 Gew.-%, vorzugsweise kleiner als 0,1 Gew.-%, bezogen auf das Gesamtgewicht der Siliconharzintermediate (A) eingesetzt, wobei gasförmige saure Katalysatoren, wie Salzsäuregas HCl oder feste saure Katalysatoren, als wässrige Lösung zur Reaktionsmasse zugegeben werden. Die Konzentration dieser wässrigen Lösungen beträgt 5 - 35 Gew.-%, vorzugsweise 10 - 30 Gew.-%, insbesondere 20 - 25 Gew.-%. Besonders bevorzugt sind 20 - 25 Gew.-%-ige wässrige Lösungen von Salzsäure.

Werden unter den Bedingungen der Destillation nicht flüchtige Katalysatoren eingesetzt, so wird am Ende der Reaktion vorzugsweise ein Neutralisationsschritt und für ein klares schwebstofffreies Produkt vorzugsweise eine Filtration durchgeführt.

Die Siliconharzintermediate aus Wiederholungseinheiten der Formel (1) besitzen Molekulargewichte Mw (Gewichtsmittel) im Bereich von 600 bis 2500 g/mol vorzugsweise mit einer Polydispersität von höchstens 5. Sie sind flüssig, wobei ihre Viskositäten vorzugsweise im Bereich von 80 bis 600 mPas, bevorzugt von 85 - 550 mPas und besonders bevorzugt von 90 bis 500 mPas, jeweils bei 25°C und Normdruck (ca. 1020 hPa) liegen.

Typische Beispiele für Siliconharzintermediate (in der Beispiel-Nummerierung abgekürzt als SM) aus Wiederholungseinheiten der Formel (1) sind hier nachfolgend wiedergegeben, wobei die Auflistung illustrierend und nicht beschränkend zu verstehen ist:
Beispiel SM 1:
   Methylphenylsiliconharzintermediate mit einem Molekulargewichtsmittel Mw von 1430 g/mol (Zahlenmittel Mn = 900; Polydispersität 2,0) und einer Viskosität von 440 mm²/s (25°C), das 14,2 Gew.-% Si-gebundene Methoxygruppen auf der Oberfläche trägt und das durchschnittlich aus 60 Mol-% PhSiO_{3/2}-Einheiten, 36 Mol-% MeSiO_{3/2}-Einheiten und 4 Mol-% Me₂SiO_{2/2}-Einheiten besteht, wobei sich die Methoxygruppen auf die angegebenen Struktureinheiten verteilen.
Beispiel SM 2:
   Methylphenylsiliconharzintermediate mit einem Molekulargewichtsmittel Mw von 1030 g/mol (Zahlenmittel Mn = 730; Polydispersität 1,4) und einer Viskosität von 140 mm²/s (25°C), das 12,3 Gew.-% Si-gebundene Methoxygruppen und 0,24 Gew.-% Si-gebundene OH-Gruppen auf der Oberfläche trägt und das durchschnittlich aus 59 Mol-% PhSiO_{3/2}-Einheiten und 41 Mol-% Me₂SiO_{2/2}-Einheiten besteht, wobei sich die Methoxygruppen auf die angegebenen Struktureinheiten verteilen.
Beispiel SM 3:
   Phenylsiliconharzintermediate mit einem Molekulargewichtsmittel Mw von 900 g/mol (Zahlenmittel Mn = 700; Polydispersität 1,3) und einer Viskosität von 300 mm²/s (25°C), das 15,0 Gew.-% Si-gebundene Methoxygruppen und 0,12 Gew.-% Si-gebundene OH-Gruppen auf der Oberfläche trägt und das zu 100 Mol-% aus PhSiO_{3/2}-Einheiten besteht, wobei sich die Methoxygruppen auf die angegebenen Struktureinheiten verteilen.
Beispiel SM 4:
   Methylphenylsiliconharzintermediate mit einem Molekulargewichtsmittel Mw von 1430 g/mol (Zahlenmittel Mn = 830; Polydispersität 1,7) und einer Viskosität von 140 mm²/s (25°C), das 12,3 Gew.-% Si-gebundene Methoxygruppen sowie 6,3 Gew.-% Si-gebundene Butoxygruppen auf der Oberfläche trägt und das durchschnittlich aus 63 Mol-% PhSiO_{3/2}-Einheiten und 37 Mol-% MeSiO_{3/2}-Einheiten besteht, wobei sich die Alkoxygruppen auf die angegebenen Struktureinheiten verteilen.
Beispiel SM 5:
   Methylphenylsiliconharzintermediate mit einem Molekulargewichtsmittel Mw von 1200 g/mol (Zahlenmittel Mn = 800; Polydispersität 1,5) und einer Viskosität von 120 mm²/s (25°C), das 13,0 Gew.-% siliziumgebundene Methoxygruppen auf der Oberfläche trägt und das durchschnittlich aus 67 mol-% PhSiO_{3/2}-Einheiten, 33 Mol.-% MeSiO_{3/2}-Einheiten besteht, wobei sich die Alkoxygruppen auf die angegebenen Struktureinheiten verteilen.
Beispiel SM 6:
   Methylsiliconharzintermediate mit einem Molekulargewichtsmittel Mw von 2500 g/mol (Zahlenmittel Mn = 900; Polydispersität 2,8) und einer Viskosität von 25 mm²/s (25°C), das 36,0 Gew.-% Si-gebundene Ethoxygruppen auf der Oberfläche trägt und das durchschnittlich aus 98 Mol-% MeSiO_{3/2}-Einheiten, 2 Mol-% Me₂SiO_{2/2}-Einheiten besteht, wobei sich die Ethoxygruppen auf die angegebenen Struktureinheiten verteilen.
Beispiel SM 7:
   Methylsiliconharzintermediate mit einem Molekulargewichtsmittel Mw von 2300 g/mol (Zahlenmittel Mn = 600; Polydispersität 3,8) und einer Viskosität von 20 mm²/s (25°C), das 31,0 Gew.-% Si-gebundene Methoxygruppen auf der Oberfläche trägt und das durchschnittlich aus 99 Mol-% MeSiO_{3/2}-Einheiten und 1 Mol-% Me₂SiO_{2/2}-Einheiten besteht, wobei sich die Alkoxygruppen auf die angegebenen Struktureinheiten verteilen.
Beispiel SM 8:
   Methylisooctylsiliconharzintermediate mit einem Molekulargewichtsmittel Mw von 1600 g/mol (Zahlenmittel Mn = 700; Polydispersität 2,3) und einer Viskosität von 15 mm²/s (25°C), das 33,0 Gew.-% Si-gebundene Methoxygruppen auf der Oberfläche trägt und das durchschnittlich aus 67 Mol-% MeSiO_{3/2}-Einheiten und 33 Mol-% ⁱOctSiO_{3/2}-Einheiten besteht, wobei sich die Alkoxygruppen auf die angegebenen Struktureinheiten verteilen.
Beispiel SM 9:
   Methylsiliconharzintermediate mit einem Molekulargewichtsmittel Mw von 2900 g/mol (Zahlenmittel Mn = 1400; Polydispersität 2,1) und einer Viskosität von 150 mm²/s (25°C), das 9,0 Gew.-% Si-gebundene Ethoxygruppen auf der Oberfläche trägt und das durchschnittlich aus 70 Mol-% MeSiO_{3/2}-Einheiten, 25 Mol-% Me₂SiO_{2/2}- und 5 Mol.-% Me₃SiO_{1/2}-Einheiten besteht, wobei sich die Alkoxygruppen auf die angegebenen Struktureinheiten verteilen.

Der erste Verfahrensschritt wird vorzugsweise bei einer Temperatur von 30°C bis 180°C, bevorzugt 35 bis 160°C, durchgeführt. Vorzugsweise wird der erste Verfahrensschritt beim Druck der umgebenden Atmosphäre, also ca. 1020 hPa, durchgeführt, wobei er aber auch bei höheren oder niedrigeren Drücken durchgeführt werden kann.

Durch den ersten Prozessschritt entstehen Siliconharze (E) aus Wiederholungseinheiten der Formel (2)

R_{c}Si(OR¹)_{d}O_{(4-c-d)/2} (2),

wobei R und R¹ die oben dafür angegebene Bedeutung haben und c vorzugsweise in mindestens 40% und bevorzugt in mindestens 50% aller Wiederholungseinheiten der Formel (2) den Wert 1 besitzt und den Wert 1 auch in 100% aller Wiederholungseinheiten der Formel (2) haben kann, und c über alle Wiederholungseinheiten der Formel (1) gemittelt durchschnittlich einen Wert von vorzugsweise 0,95 bis 1,9 und bevorzugt einen Wert von 1,0 bis 1,8 besitzt, wobei c = 1 und c = 2 besonders bevorzugte Werte für c in den Wiederholungseinheiten der Formel (2) sind, insbesondere c = 1,
d über alle Wiederholungseinheiten der allgemeinen Formel (1) gemittelt einen durchschnittlichen Wert von vorzugsweise 0,08 bis 0,90 und bevorzugt von 0,10 bis 0,80 besitzt,
wobei in den Siliconharzen aus Wiederholungseinheiten der Formel (2) die Einheit OR² bevorzugt zu höchstens 5 Gewichtsprozent, besonders bevorzugt höchstens 4 Gewichtsprozent insbesondere höchstens 3 Gewichtsprozent, Hydroxylgruppen bedeutet. Silanolgruppen müssen in den Siliconintermediaten aus Wiederholungseinheiten der Formel (2) nicht vorhanden sein. Sie entstehen während der Reaktion durch Hydrolyse der notwendigerweise vorhandenen Alkoxygruppen.

Die Siliconharzintermediate aus Wiederholungseinheiten der Formel (2) besitzen Molekulargewichte Mw (Gewichtsmittel) im Bereich von mehr als 2.500 g/mol und höchstens 10.000 g/mol mit einer Polydispersität von vorzugsweise höchstens 25 und sind vorzugsweise flüssig.

Der Unterschied im Molekulargewicht Mw zwischen den eingesetzten Siliconharzintermediates aus Wiederholungseinheiten der Formel (1) und den Siliconharzen aus Wiederholungseinheiten der Formel (2) beträgt mindestens das 1,5-fache des Siliconharzintermediates aus Wiederholungseinheiten der Formel (1), d.h. in dem Gemisch aus mindestens 2 verschiedenen Siliconharzintermediates aus Wiederholungseinheiten der Formel (1), mindestens das 1,5-fache des Molekulargewichtes der Siliconharzintermediates mit dem niedrigsten Molekulargewicht, bevorzugt das mindestens 1,8-fache, insbesondere das mindestens 2-fache. Um das angegebene Vielfache ist das Molekulargewicht der Siliconharze aus Wiederholungseinheiten der Formel (2) höher als das Molekulargewicht der Siliconharzintermediates aus Formel (1), bzw. im Gemisch aus Siliconharzintermediates aus Wiederholungseinheiten der Formel (1) desjenigen Siliconharzintermediates aus Wiederholungseinheiten der Formel (1) mit dem niedrigsten Molekulargewicht Mw.
Der stufenweise Anstieg des Molekulargewichtes von Stufe zu Stufe ist ein besonderes und essentielles Kennzeichen des erfindungsgemäßen Verfahrens. Wird der hier wiedergegebene Anstieg im Molekulargewicht nicht erreicht, dann wird die später in den Beispielen beschriebene Leistungsfähigkeit der Endprodukte nicht erreicht. Insbesondere wird nicht die Kombination aus rascher Trocknung bei Raumtemperatur und gleichzeitig guter Vernetzbarkeit zu einem lösemittelfesten korrosionsschützenden, harten Überzug erreicht.

Im erfindungsgemäßen Verfahren werden in der zweiten Stufe, bzw. im zweiten Reaktionsschritt die Siliconharze (E) aus Wiederholungseinheiten der Formel (2), die in der ersten Stufe erhalten wurden, in Gegenwart eines mehrwertigen, mindestens drei kohlenstoffgebundene OH-Gruppen tragenden Alkohols (F) weiter zum erfindungsgemäßen Endprodukt aufkondensiert.

Dabei ist es ein besonderes Merkmal des erfindungsgemäßen Verfahrens, das es vom Stand der Technik unterscheidet, dass die harzgebundenen Alkoxygruppen (Si-OR¹) in (E) gegenüber den kohlenstoffgebundenen OH-Gruppen (COH) im mindestens drei C-gebundene OH-Gruppen tragenden Alkohols (F) im deutlichen Überschuss vorliegen. Das Si-OR¹ : COH-Verhältnis, also das Verhältnis der silicongebundenen Alkoxygruppen zu den C-gebundenen OH-Gruppen des Alkohols, beträgt bevorzugt mindestens 2,25:1, insbesondere mindestens 2,5:1.

Als mehrwertige Alkohole (F) werden vorzugsweise Alkohole mit drei bis vier C-gebundenen OH-Gruppen, bevorzugt drei C-gebundenen OH-Gruppen, eingesetzt.

Vorzugsweise werden mehrwertige Alkohole (F) der Formel

R³(-OH)ₓ,

eingesetzt, wobei R³ einen drei- bis mehrwertigen Kohlenwasserstoffrest mit 5 bis 25 C-Atomen, der ggf. durch ein oder mehreren Heteroatome, vorzugsweise Sauerstoffatome und Carbonylgruppen, unterbrochen ist, bedeutet und
x eine ganz Zahl von 3 bis 20, vorzugsweise 3 bis 4, bevorzugt 3, ist.

Beispiele für mehrwertige, mindestens 3 C-gebundene OH-Gruppen umfassende Alkohole (F) sind Trimethylolethan, Trimethylolpropan, Ditrimethylolpropan, Glycerin, Pentaerythritol und Polyole gemäß Formel (4)

R⁵-OC(=O)-R⁶-C(=O)O-R⁷ (4)

oder Gemische der genannten Beispiele.

Dabei bedeuten R⁵ und R⁷ gleiche oder verschiedene, einwertige, lineare, verzweigte oder cylische aliphatisch gesättige Kohlenwasserstoffreste, die 2 bis 15 Kohlenstoffatome umfassen und die mindestens eine Carbinolgruppe umfassen, wobei die Summe der Carbinolgruppen beider Reste R⁵ und R⁷ zusammen mindestens 3 ergeben muss. Das heißt, besitzt eine Rest R⁵ nur eine Carbinolgruppe, dann muss Rest R⁷ gleichzeitig mindestens 2 Carbinolgruppen umfassen.
Reste R⁶ sind zweiwertige lineare, verzweigte, cyclische oder aromatische Kohlenwasserstoffreste mit 2 bis 12 Kohlenstoffatomen.

Beispiele für Reste R⁵ und R⁷ sind HO(CH₂)₂- ; HO(CH₂)₃- ; H₃C-CH(OH)-CH₂- ; HO-H₂C-C(CH₃)₂CH₂- ; (HOCH₂)₃C-CH₂- ; H₃C-C(CH₂OH)₂CH₂- ; HO-H₂C-CH(OH)-CH₂- ; H₅C₂-C(CH₂OH)₂-CH₂-.

Bevorzugt sind möglichst kleine, also möglichst wenige Kohlenstoffatome umfassende mehrwertige, mindestens 3 C-gebundene OH-Gruppen umfassende Alkohole (F), da größere organische Reste insbesondere bei Hochtemperaturanwendungen den Nachteil haben zu verbrennen, so dass größere organische Reste umfassende Bindemittel einen entsprechenden Schrumpf aufweisen, der zu Spannungen und schlechterer Leistung der Beschichtung führt.

Aus verfahrenstechnischen Gründen sind insbesondere diejenigen mehrwertigen, mindestens drei C-gebundene OH-Gruppen umfassende Alkohole (F) bevorzugt, die sich entweder in Wasser oder in Methanol zu mindestens 50 Gew.-% Festgehalt lösen, insbesondere diejenigen, die sich zu mindestens 50 Gew.-% in Wasser lösen. Bevorzugte Beispiele sind dies Trimethylolethan, Trimethylolpropan, Ditrimethylolpropan und Glycerin. Besonders bevorzugte Beispiele sind Ditrimethylolpropan und Trimethylolpropan. Ein ganz besonders bevorzugtes Beispiel ist Trimethylolpropan.

Nach dem zweiten Verfahrensschritt werden vorzugsweise Siliconharze (K) aus Wiederholungseinheiten der Formel (3):

R_{c}Si(OR⁴)_{d}O_{(4-c-d)/2} (3)

erhalten werden, wobei
- R, c und d: die oben dafür angegebene Bedeutung haben,
- R⁴: gleich oder verschieden ist und ein Rest R² ist, wobei R² ein C₁-C₆-Alkylrest ist,
oder R⁴ ein einwertiger Rest R³' ist, wobei R³' von dem mehrwertigen, mindestens drei C-gebundene OH-Gruppen tragenden Alkohol (F) minus mindestens einer der OH-Gruppen stammt, wobei R³' vorzugsweise einen einwertigen Kohlenwasserstoffrest mit 5 bis 25 C-Atomen, der ggf. durch ein oder mehreren Heteroatomen, vorzugsweise Sauerstoffatome und Carbonylgruppen, unterbrochen ist und ggf. ein oder mehrere OH-Gruppen enthält, bedeutet,
oder R⁴ einen verbrückenden Rest R³* bedeutet, wobei R³* zwei oder mehrere Wiederholungseinheiten der Formel (3) über zwei oder mehrere -OR⁴ Gruppen verbrückt und von dem mehrwertigen, mindestens drei C-gebundene OH-Gruppen tragenden Alkohol (F) minus mindestens zwei der OH-Gruppen stammt, wobei R³* vorzugsweise einen zwei- bis mehrwertigen Kohlenwasserstoffrest mit 5 bis 25 C-Atomen, der ggf. durch ein oder mehreren Heteroatome, vorzugsweise Sauerstoffatome und Carbonylgruppen, unterbrochen ist und der ggf. noch ein oder mehrere OH-Gruppen enthält, bedeutet,
mit der Maßgabe, dass im Siliconharz (K)
0,01 - 3 Gew.-% aller Reste Si-O-gebundene Reste R³' und R³* sind, die von dem mehrwertigen Alkohol in gebundener Form stammen,
3 - 10 Gew.-% aller Si-gebundenen Reste einen Rest -OR⁴ bedeuten, bei dem R⁴ einen C₁-C₆-Alkylrest R² bedeutet, und höchstens 5 Gew.-% Si-gebundene Hydroxylgruppen enthalten sind.

Reste R⁴ im Siliconharz (K) der Formel (3) sind Reste vom Typ R², wobei R² ein C₁-C₆-Alkylrest ist,
oder der Rest R⁴ kann ein einwertiger Rest R³' sein, wobei R³' bevorzugt einen C₅-C₂₅-Alkyl-, C₅-C₂₅-Cycloalkyl-, oder ggf. eine cyclische Alkylgruppe umfassenden C₅-C₂₅-Aralkylrest, der ggf. durch ein oder mehrere Heteroatome unterbrochen ist und der ggf. ein oder mehrere OH-Gruppen enthält, bedeutet oder der Rest R⁴ kann einen verbrückenden Rest R³* bedeuten, wobei R³* bevorzugt einen zwei oder mehrere Wiederholungseinheiten der Formel (3) verbrückenden C₅-C₂₅-Alkylen-, C₅-C₂₅-Cycloalkylen- oder ggf. eine cyclische Alkyleinheit umfassenden C₅-C₂₅-Aralkylenrest, der ggf. durch ein oder mehrere Heteroatome, vorzugsweise Sauerstoffatom oder Carbonylgruppe, unterbrochen ist und der ggf. ein oder mehrere OH-Gruppen enthält, bedeutet.

Die Reste R³' und die zwei oder mehrere Wiederholungseinheiten der Formel (3) verbrückende Reste R³*, entstehen dabei durch die Reaktion der Siliconharze (E) aus Wiederholungseinheiten der Formel (2) mit den mehrwertigen, mindestens 3 C-gebundene OH-Gruppen tragenden Alkoholen (F). Diese führen zu verbrückenden und damit zwischen verschiedenen Siliconharzwiederholungseinheiten der Formel (3) vernetzend wirkenden Einheiten oder zu terminal gebundenen Einheiten, die noch über kohlenstoffgebundene OH-Gruppen verfügen.

In den Wiederholungseinheiten der Formel (3) bedeuten vorzugsweise 0,02 - 2,0 Gew-%, bevorzugt 0,03 - 1,0 Gew-%, insbesondere 0,04 - 0,6 Gew-%, aller Reste einen Si-O-gebundenen Rest R³*, wobei R³* die oben dafür angegebene Bedeutung hat.

In den Wiederholungseinheiten der Formel (3) bedeuten 3 - 10 Gew.-% aller Si-gebundenen Reste einen Rest OR⁴, bei dem R⁴ einen C₁-C₆-Alkylrest R² bedeutet, wobei für den Rest R⁴ in diesen Fällen der Methyl- und der Ethylrest besonders bevorzugt ist, vor allem der Methylrest. Bevorzugt bedeuten 3,0 - 9,5 Gew.-% aller Si-gebundenen Reste einen Rest OR⁴, bei dem R⁴ einen einwertigen C₁-C₆-Alkylrest R² bedeutet, besonders bevorzugt 3,5 - 9,0 Gew.-%, insbesondere 3,5 - 8,5 Gew.-%.

In den Siliconharzen aus Wiederholungseinheiten der Formel (3) bedeuten die Einheiten OR⁴ bevorzugt zu höchstens 4 Gewichtsprozent, besonders bevorzugt höchstens 3 Gewichtsprozent insbesondere höchstens 2 Gewichtsprozent siliziumgebundene Hydroxylgruppen. Silanolgruppen müssen in den Siliconharzen (K) aus Wiederholungseinheiten der Formel (3) nicht vorhanden sein. Sie entstehen ggf. während der Reaktion durch Hydrolyse der notwendigerweise vorhandenen Alkoxygruppen auch dann, wenn in den zur Herstellung verwendeten Siliconharzen aus Wiederholungseinheiten der Formel (2) selbst keine Hydroxylgruppen vorhanden sind.

Im zweiten Verfahrensschritt erfolgt die Hydrolyse und Kondensation wiederum durch den Einsatz von Wasser (G) als Reaktionspartner für die Hydrolyse und mit einem der Reaktionsmischung saure Eigenschaften verleihenden Katalysator (H). Dabei sind die gleichen Katalysatoren geeignet und bevorzugt, wie sie bereits für die Katalysatoren (C) der ersten Stufe beschrieben sind. Insbesondere ist auch hier HCl in Form der 20 - 25%-igen wässrigen Lösung bevorzugt.

Die Menge Wasser (G) wird wiederum mindestens so bemessen, dass sie stöchiometrisch für die zu hydrolysierende Menge an Alkoxygruppen ausreicht. Der bei der Kondensation entstehende Alkohol wird ggf. im Gemisch mit Wasser abdestilliert, um das Gleichgewicht der Kondensationsreaktion auf die Seite der Kondensate zu verschieben. Die zweite Stufe wird vorzugsweise unter Verwendung eines inerten Lösemittels (J) ausgeführt. Das inerte Lösemittel wird zu Beginn der Ausführung der zweiten Stufe in einer solchen Menge zudosiert, dass die Mischung aus Siliconharz (K) aus Wiederholungseinheiten der Formel (3) und dem inerten Lösemittel alleine für sich betrachtet eine 40- bis 90%-ige Lösung ergeben würde, d.h. eine Lösung, die 40 bis 90 Gew.-% Harz und entsprechend 60 bis 10 Gew.-% inertes Lösemittel umfassen würde. Vorzugsweise wird eine solche Menge des inerten Lösemittels zudosiert, dass eine wie eben beschriebene 45- bis 85%-ige, besonders bevorzugt eine 50- bis 85%-ige, insbesondere eine 50- bis 85%-ige Harzlösung entstehen würde, bei reiner Betrachtung der vorhandenen Mengen an Harz und inertem Lösemittel.

Der zweite Verfahrensschritt wird vorzugsweise bei einer Temperatur von 40 bis 180°C, bevorzugt 45 bis 170°C, durchgeführt. Vorzugsweise wird der zweite Verfahrensschritt beim Druck der umgebenden Atmosphäre, also ca. 1020 hPa, durchgeführt, wobei er aber auch bei höheren oder niedrigeren Drücken durchgeführt werden kann.

Nach beendeter Reaktion werden vorzugsweise ggf. noch vorhandene Mengen an Wasser und Alkohol, sowie das zugesetzte inerte Lösemittel vollständig abdestilliert und die erhaltene Reaktionsmasse sodann in einem geeigneten inerten Lösemittel, das ggf. von dem während der Reaktionsphase der zweiten Stufe zugesetzten organischen Lösemittel unterschiedlich sein kann, vorzugsweise aber nicht unterschiedlich ist, zu einer homogenen Mischung aufgenommen. Dabei wird die Menge an final zugesetztem organischem Lösemittel bedarfsweise gewählt.

Die während der zweiten Stufe verwendete Säure wird sofern sie flüchtig ist, vorzugsweise während der Destillation der Lösemittel ausgetrieben oder ggf. durch Neutralisation mit einer geeigneten Base neutralisiert. Dabei ggf. anfallendes Salz wird durch Filtration entfernt. Bevorzugt wird eine flüchtige Säure gewählt, insbesondere Salzsäure, die während der Destillation ausgetrieben wird, so dass keine Neutralisation erforderlich ist.

Geeignete Basen zur Neutralisation sind Alkalihydroxide wie Natriumhydroxid und Kaliumhydroxid, Alkalisiliconate wie Natriumsiliconat und Kaliumsiliconat, Amine wie beispielsweise Trimethylamin, Ethylamin, Diethylamin, Triethylamin und n-Butylamin, Ammoniumverbindungen wie Tetramethylammoniumhydroxid, Tetra-n-butylammoniumhydroxid, Benzyltrimethylammoniumhydroxid, Alkoholate wie Natrimumethanolat, Kaliummethanolat und Natrium- oder Kaliumethanolat, wobei Natriumhydroxid, Kaliumhydroxid, Natrimmethanolat und Natriumethanolat besonders bevorzugt sind.

Als inerte wasserunlösliche Lösemittel (J) kommen alle in Frage, die das Siliconharz (K) in ausreichendem Maße lösen und gleichzeitig eine Wasserlöslichkeit von weniger als 2000 mg/l in Wasser bei 20°C besitzen. Das sind insbesondere aromatische Lösemittel, wie Toluol und die verschiedenen Xylolisomeren oder Gemische davon bzw. entsprechende aromatische Destillatschnitte. Bevorzugt sind die Xylolisomeren und Gemische derselben.

Das Molekulargewicht Mw der Siliconharze (K) aus Wiederholungseinheiten der Formel (3) beträgt bevorzugt das mindestens 1,4-fache, insbesondere das mindestens 1,6-fache des Molekulargewichtes der Siliconharze (E) aus Wiederholungseinheiten der Formel (2).

Der stufenweise Anstieg des Molekulargewichtes von Stufe zu Stufe ist ein besonderes und essentielles Kennzeichen des erfindungsgemäßen Verfahrens. Wird der hier wiedergegebene Anstieg im Molekulargewicht nicht erreicht, dann wird die später in den Beispielen beschriebene Leistungsfähigkeit der Endprodukte nicht erreicht. Insbesondere wird nicht die Kombination aus rascher Trocknung bei Raumtemperatur und gleichzeitig guter Vernetzbarkeit zu einem lösemittelfesten korrosionsschützenden, harten Überzug erreicht.

Die Silicone (K) aus Wiederholungseinheiten der Formel (3) besitzen Molekulargewichte Mw (Gewichtsmittel) im Bereich von 5.000 bis 50.000 g/mol vorzugsweise mit einer Polydispersität von höchstens 25. Sie sind als reine Harze bevorzugt hochviskos flüssig oder fest.

Sie zeichnen sich durch hohe Lagerstabilität aus, wobei die Lagerstabilität ggf. durch den Zusatz von Stabilisatoren weiter verbessert werden kann. Geeignete Stabilisatoren (L) sind solche die mit den verbliebenen Säurespuren oder die mit verbliebenen Spuren von Wasser reagieren. Sie sind vorzugsweise flüssig oder in den erfindungsgemäßen Harzen (K) aus Wiederholungseinheiten der Formel (3) lösliche Feststoffe.

Beispiele für Stabilisatoren (L), die mit Säurespuren reagieren sind etwa epoxyfunktionelle Verbindungen, wie epoxidiertes Sojabohnenöl, Amine, wie Trialkylamine, beispielsweise Tri-n-octylamin oder Triisooctylamin. Typische Beispiele für Wasserfänger sind Acetale des Acetons, wie 2,2 Dimethoxypropan und 2,2-Dimethyl-1,3-dioxolan.

Die nach dem erfindungsgemäßen Verfahren hergestellten hochmolekularen Siliconharze (K) eignen sich besonders gut zum Einsatz in korrosionsschützenden Zubereitungen. Insbesondere sind sie geeignet zur Verwendung zum Zwecke des Korrosionsschutzes bei hoher Temperatur.

Außer zum Zwecke des hochtemperaturbeständigen Korrosionsschutzes können die nach dem erfindungsgemäßen Verfahren hergestellten hochmolekularen Siliconharze auch zum Korrosionsschutz von Armierungsstahl in Stahlbeton eingesetzt werden, wobei die erfindungsgemäßen Verbindungen hierbei sowohl in reiner Form als auch in Zubereitungen eingesetzt werden können. Korrosionssinhibierende Effekte im Stahlbeton werden dabei sowohl dann erreicht, wenn man die erfindungsgemäßen Verbindungen oder Zubereitungen, die diese enthalten in die Betonmischung einbringt, bevor sie in Form gebracht und ausgehärtet wird, als auch wenn man die erfindungsgemäßen Verbindungen oder Zubereitungen, die diese enthalten auf die Oberfläche des Betons aufbringt, nachdem der Beton ausgehärtet ist.

Außer zum Zwecke des Korrosionsschutzes auf Metallen können die nach dem erfindungsgemäßen Verfahren hergestellten hochmolekularen Siliconharze auch zur Manipulation von weiteren Eigenschaften von Zubereitungen, die die nach dem erfindungsgemäßen Verfahren hergestellten hochmolekularen Siliconharze enthalten oder von Festkörpern oder Filmen, die aus Zubereitungen erhalten werden, die die nach dem erfindungsgemäßen Verfahren hergestellten hochmolekularen Siliconharze enthalten, dienen wie z.B.:
- Steuerung des elektrischen Leitfähigkeit und des elektrischen Widerstandes
- Steuerung der Verlaufseigenschaften einer Zubereitung
- Steuerung des Glanzes eines feuchten oder gehärteten Filmes oder eines Objektes
- Erhöhung der Bewitterungsbeständigkeit
- Erhöhung der Chemikalienresistenz
- Erhöhung der Farbtonstabilität
- Reduzierung der Kreidungsneigung
- Reduzierung oder Erhöhung der Haft- und Gleitreibung auf Festkörpern oder Filmen erhalten aus Zubereitungen, die erfindungsgemäße Zubereitung enthaltend
- Stabilisierung oder Destabilisierung von Schaum in der Zubereitung, die die erfindungsgemäße Zubereitung enthält
- Verbesserung der Haftung der Zubereitung die die nach dem erfindungsgemäßen Verfahren hergestellten hochmolekularen Siliconharze enthält zu Substraten auf oder zwischen die die Zubereitung die die nach dem erfindungsgemäßen Verfahren hergestellten hochmolekularen Siliconharze enthält, aufgetragen wird,
- Steuerung des Füllstoff- und Pigmentnetz- und - dispergierverhaltens,
- Steuerung der rheologischen Eigenschaften der Zubereitung, die die nach dem erfindungsgemäßen Verfahren hergestellten hochmolekularen Siliconharze enthält,
- Steuerung der mechanischen Eigenschaften, wie z.B. Flexibilität, Kratzfestigkeit, Elastizität, Dehnbarkeit, Biegefähigkeit, Reißverhalten, Rückprallverhalten, Härte, Dichte, Weiterreißfestigkeit, Druckverformungsrest, Verhalten bei verschiedenen Temperaturen, Ausdehnungskoeffizient, Abriebfestigkeit sowie weiterer Eigenschaften wie der Wärmeleitfähigkeit, Brennbarkeit, Gasdurchlässigkeit, Beständigkeit gegen Wasserdampf, Heißluft, Chemikalien, Bewitterung und Strahlung, der Sterilisierbarkeit, von Festkörpern oder Filmen erhältlich, die die nach dem erfindungsgemäßen Verfahren hergestellten hochmolekularen Siliconharze oder diese enthaltende Zubereitung enthält
- Steuerung der elektrischen Eigenschaften, wie z.B. dielektrischer Verlustfaktor, Durchschlagfestigkeit, Dielektrizitätskonstante, Kriechstromfestigkeit, Lichtbogenbeständigkeit, Oberflächenwiderstand, spezifischer Durchschlagswiderstand,
- Flexibilität, Kratzfestigkeit, Elastizität, Dehnbarkeit, Biegefähigkeit, Reißverhalten, Rückprallverhalten, Härte, Dichte, Weiterreißfestigkeit, Druckverformungsrest, Verhalten bei verschiedenen Temperaturen von Festkörpern oder Filmen erhältlich aus der Zubereitung die die nach dem erfindungsgemäßen Verfahren hergestellten hochmolekularen Siliconharze enthält.

Beispiele für Anwendungen, in denen die erfindungsgemäße Zubereitung eingesetzt werden kann, um die oben bezeichneten Eigenschaften zu manipulieren, sind die Herstellung von Beschichtungsstoffen und Imprägnierungen und daraus zu erhaltenden Beschichtungen und Überzügen auf Substraten, wie Metall, Glas, Holz, mineralisches Substrat, Kunst- und Naturfasern zur Herstellung von Textilien, Teppichen, Bodenbelägen, oder sonstigen aus Fasern herstellbaren Gütern, Leder, Kunststoffe wie Folien, und Formteilen. Die erfindungsgemäßen hochmolekularen Siliconharze können in Zubereitungen bei entsprechender Auswahl der Zubereitungskomponenten außerdem als Additiv zum Zwecke der Entschäumung, der Verlaufsförderung, Hydrophobierung, Hydrophilierung, Füllstoff- und Pigmentdispergierung, Füllstoff- und Pigmentbenetzung, Substratbenetzung, Förderung der Oberflächenglätte, Reduzierung des Haft- und Gleitwiderstandes auf der Oberfläche der aus der additivierten Zubereitung erhältlichen ausgehärteten Masse eingesetzt werden. Die nach dem erfindungsgemäßen Verfahren hergestellten hochmolekularen Siliconharze können in flüssiger oder in ausgehärteter fester Form in Elastomermassen eingearbeitet werden. Hierbei können sie zum Zwecke der Verstärkung oder zur Verbesserung anderer Gebrauchseigenschaften, wie der Steuerung der Transparenz, der Hitzebeständigkeit, der Vergilbungsneigung, oder der Bewitterungsbeständigkeit, eingesetzt werden.

Alle vorstehenden Symbole der vorstehenden Formeln weisen ihre Bedeutungen jeweils unabhängig voneinander auf. In allen Formeln ist das Siliziumatom vierwertig.

### Beispiele:

Im Folgenden wird das erfindungsgemäße Verfahren in Beispielen beschrieben. Alle Prozentangaben beziehen sich auf das Gewicht. Falls nicht anders angegeben werden alle Manipulationen bei Raumtemperatur von etwa 23°C und unter Normaldruck (1,013 bar) ausgeführt. Bei den Apparaten handelt es sich um handelsübliche Laborgeräte wie sie von zahlreichen Geräteherstellern käuflich angeboten werden.
Ph bedeutet einen Phenylrest = C₆H₅-
Me bedeutet einen Methylrest = CH₃-. Me₂ bedeutet entsprechend zwei Methylreste.

Im vorliegenden Text werden Stoffe durch Angabe von Daten charakterisiert, die mittels instrumenteller Analytik erhalten werden. Die zugrundeliegenden Messungen werden entweder öffentlich zugänglichen Normen folgend durchgeführt oder nach speziell entwickelten Verfahren ermittelt. Um die Klarheit der mitgeteilten Lehre zu gewährleisten, sind die verwendeten Methoden hier nachfolgend angegeben.
In allen Beispielen beziehen sich alle Angaben von Teilen und Prozentsätzen auf das Gewicht, falls nicht anders angegeben.

### Viskosität:

Die Viskositäten werden, wenn nicht anders angegeben, durch rotationsviskosimetrische Messung gemäß DIN EN ISO 3219 bestimmt. Falls nicht anders angegeben, gelten alle Viskositätsangaben bei 25°C und Normaldruck von 1013 mbar.

### Brechungsindex:

Die Brechungsindices werden im Wellenlängenbereich des sichtbaren Lichtes bestimmt, falls nicht anders angegeben bei 589 nm bei 25°C und Normaldruck von 1013 mbar gemäß der Norm DIN 51423.

### Transmission:

Die Transmission wird durch UV VIS Spektroskopie bestimmt. Ein geeignetes Gerät ist beispielsweise das Analytik Jena Specord 200.
Die verwendeten Messparameter sind: Bereich: 190 - 1100 nm Schrittweite: 0,2 nm, Integrationszeit: 0,04 s, Messmodus: Schrittbetrieb. Als erstes erfolgt die Referenzmessung (Background). Eine Quarzplatte befestigt an einem Probenhalter (Dimension der Quarzplatten: HxB ca. 6 x 7 cm, Dicke ca 2,3 mm) wird in den Probenstrahlengang gegeben und gegen Luft gemessen. Danach erfolgt die Probenmessung. Eine am Probenhalter befestigte Quarzplatte mit aufgetragener Probe - Schichtdicke aufgetragene Probe ca. 1 mm - wird in den Probenstrahlengang gegeben und gegen Luft gemessen. Interne Verrechnung gegen Backgroundspektrum liefert das Transmissionsspektrum der Probe.

### Molekülzusammensetzungen:

Die Molekülzusammensetzungen werden mittels Kernresonanzspektroskopie bestimmt (zu Begrifflichkeiten siehe ASTM E 386: Hochauflösende magnetische Kernresonanzspektroskopie (NMR): Begriffe und Symbole), wobei der ¹H-Kern und der ²⁹Si-Kern vermessen wird.

### Beschreibung ¹H-NMR Messung

| | |
|---|---|
| Solvent: | CDCl3, 99,8%d |
| Probenkonzentration: | ca. 50 mg / 1 ml CDCl3 in 5 mm NMR-Röhrchen |

Messung ohne Zugabe von TMS, Spektrenreferenzierung von Rest-CHCl3 in CDCl3 auf 7,24 ppm

| | |
|---|---|
| Spektrometer: | Bruker Avance I 500 oder Bruker Avance HD 500 |
| Probenkopf: | 5 mm BBO-Probenkopf oder SMART-Probenkopf (Fa. Bruker) |

### Meßparameter:

Pulprog = zg30
TD = 64k
NS = 64 bzw. 128 (abhängig von der Empfindlichkeit des Probenkopfes)
SW = 20,6 ppm
AQ = 3,17 s
D1 = 5 s
SFO1 = 500,13 MHz
O1 = 6,175 ppm

### Processing-Parameter:

SI = 32k
WDW = EM
LB = 0,3 Hz

Je nach verwendetem Spektrometertyp sind evtl. individuelle Anpassungen der Messparameter erforderlich.

### Beschreibung ²⁹Si-NMR Messung

| | |
|---|---|
| Solvent: | C6D6 99,8%d/CCl4 1:1 v/v mit 1Gew% Cr(acac)₃ als Relaxationsreagenz |
| Probenkonzentration: | ca. 2 g / 1,5 ml Solvent in 10 mm NMR-Röhrchen |
| Spektrometer: | Bruker Avance 300 |
| Probenkopf: | 10 mm 1H/13C/15N/29Si glasfreier QNP-Probenkopf (Fa. Bruker) |

### Messparameter:

Pulprog = zgig60
TD = 64k
NS = 1024 (abhängig von der Empfindlichkeit des Probenkopfes)
SW = 200 ppm
AQ = 2,75 s
D1 = 4 s
SFO1 = 300,13 MHz
O1 = -50 ppm

### Processing-Parameter:

SI = 64k
WDW = EM
LB = 0,3 Hz

Je nach verwendetem Spektrometertyp sind evtl. individuelle Anpassungen der Messparameter erforderlich.

### Molekulargewichtsverteilungen:

Molekulargewichtsverteilungen werden als Gewichtsmittel Mw und als Zahlenmittel Mn bestimmt, wobei die Methode der Gelpermeationschromatographie (GPC bzw. Size Exclusion Chromatographie (SEC)) Anwendung findet mit Polystyrol Standard und Brechnungsindexdetektor (RI-Detektor). Wo nicht anders ausgewiesen wird THF als Eluent verwendet und DIN 55672-1 angewendet. Die Polydispersität ist der Quotient Mw/Mn.

### Glasübergangstemperaturen:

Die Glasübergangstemperatur wird nach Dynamischer Differenzkalorimetrie (Differential Scanning Calorimetry, DSC) nach DIN 53765, gelochter Tigel, Aufheizrate 10 K/min bestimmt.

### Bestimmung der Teilchengröße:

Die Partikelgrößen wurden nach der Methode der Dynamic Light Scattering (DLS) unter Bestimmung des Zetapotenzials gemessen. Für die Bestimmung wurden folgende Hilfsmittel und Reagenzien verwendet:
Polystyrolküvetten 10 x 10 x 45 mm, Pasteurpipetten für den Einmalgebrauch, Ultra reines Wasser.
Die zu vermessende Probe wird homogenisiert und blasenfrei in die Messküvette eingefüllt.
Die Messung erfolgt bei 25°C nach einer Äquilibrierzeit von 300s mit hoher Auflösung mit automatischer Messzeiteinstellung.

Die angegebenen Werte beziehen sich immer auf den Wert D(50). D(50) ist als volumengemittelter Partikeldurchmesser zu verstehen, bei dem 50% aller gemessenen Partikel einen volumengemittelten Durchmesser kleiner als der ausgewiesene Wert D(50) aufweisen.

### Beispiel 1: Herstellung eines Siliconharzes nach dem erfindungsgemäßen zweistufigen Verfahren.

### Erste Stufe:

In einem 4 l Vierhalskolben mit Rückflusskühler und Tropftrichter werden unter Stickstoff 1890,0 g des Siliconharzintermediates SM 1 (Alkoxygehalt 14,2 Gew.-%, Mw = 1430 g/mol) mit 210,0 g des Siliconharzintermediates SM 2 (12,3 Gew.-% Alkoxygruppen, Mw = 1030 g/mol) und 900,0 g Methanol gemischt. Man erhält eine klare, niederviskose Zubereitung.
Zu dieser Mischung werden 96,2 g einer wässrigen Salzsäurelösung dosiert, die durch Vermischen von 4,20 g 20%-iger wässriger HCl-Lösung mit 92 g vollentsalztem Wasser hergestellt wurde. Die Dosierung dieser wässrigen salzsauren Zubereitung dauert 10 min.
Das Gemisch wird trüb und erwärmt sich leicht, wobei die beobachtete Exothermie unter den gewählten Bedingungen 4°C beträgt, so dass die Endtemperatur nach Dosierung 23°C beträgt. Anschließend wird mit einer Heizrate von 40°C/h auf Rückflußtemperatur von 65°C aufgeheizt. Das Gemisch klart während des Aufheizens auf. Man hält für 2 h am Rückfluss.
Das Gemisch wird auf Raumtemperatur abgekühlt. Man dosiert anschließend 3,80 g einer 30%-igen Natriummethylat Lösung in Methanol zu. Das Gemisch ist danach pH neutral.
Die flüchtigen Bestandteile werden bei 80°C und 10 mbar Unterdruck am Rotationsverdampfer entfernt. Der erhaltene Rückstand wird anschließend mit Xylol so verdünnt, dass eine 80%-ige Lösung in Xylol erhalten wird, d.h. die Zubereitung enthält 80% des Siliconharzes und 20% Xylol.
Man setzt als Fitrationshilfsmittel 2,0 g DICALITE® Perlite Filterhilfe 478 (Süd Chemie)zu und filtriert über eine Druckfilternutsche mit einer Filterschicht Seitz K 100 ab.
Man erhält eine klare, farblose Lösung
Der Restmethoxygehalt des Harzes beträgt 6,55 Gew.-% und ist damit um mehr als 50% niedriger als der durchschnittliche Methoxygehalt der Ausgangsmischung von 14,01 Gew.-%.
Per SEC (Eluent THF) wurden folgende Molekulargewichte bestimmt: Mw = 3800 g/mol, Mn = 1300 g/mol, Polydispersität PD = 2,9. Damit ist Mw mehr als doppelt so hoch wie bei den verwendeten Siliconharzintermediates SM 1 und SM 4.

Nach ²⁹Si-NMR ist die molare Zusammensetzung:
Me₂Si(OMe)O_{1/2}: 2,93 %
Me₂SiO_{2/2}: 7,3 %
Me(OMe)₂SiO_{1/2}: 1,54 %
Me(OMe)SiO_{2/2}: 9,23 %
MeSiO_{3/2}: 24,1 %
Ph(OMe)₂SiO_{1/2}: 0,6 %
Ph(OMe)SiO_{2/2}: 27,5 %
PhSiO_{3/2}: 26,8 %

Die Lösung, die nach der Filtration erhalten wurde, erweist sich bei Lagerung im Trockenschrank (4 Wochen bei 60°C) als viskositäts- und damit lagerstabil.

### Zweite Stufe:

In einem 4 l Vierhalskolben mit Rückflusskühler und Tropftrichter werden unter Stickstoff 1800,0 g der 80%-igen xylolischen Siliconharzlösung der ersten Stufe dieses Beispiels, enthaltend 1440,0 g Siliconharz, also 0,38 mol Harz mit 28,8 g (0,21 mol) Trimethylolpropan (2% bezogen auf das Siliconharz in den 1800,0 g Lösung) gemischt. Die Mischung ist trüb.
Das Siliconharz enthält 6,55 Gew.-% Methoxygruppen (MeO- mit Molekulargewicht 31 g/mol), so dass in 1440 g Siliconharz 94,32 g bzw. 3,04 mol Methoxygruppen vorhanden sind.
0,21 mol Trimethylolpropan enthalten 0,62 mol Hydroxygruppen, so dass ein molares Si-OMe : COH-Verhältnis von 5,0:1 vorliegt.
Zu dieser Mischung werden 141,8 g einer wässrigen Salzsäurelösung dosiert, die durch Vermischen von 3,60 g 20%-iger wässriger HCl-Lösung mit 138,2 g vollentsalztem Wasser hergestellt wurde. Die Dosierung dieser wässrigen salzsauren Zubereitung dauert 10 min.
Das Gemisch bleibt trüb, eine Exothermie wird unter den gewählten Bedingungen nicht beobachtet. Die Temperatur der Mischung beträgt nach beendeter Salzsäurezugabe 22°C. Anschließend wird mit einer Heizrate von 40°C/h aufgeheizt. Ab 94,2°C tritt ein Rückfluß auf. Das Gemisch klart während des Aufheizens auf. Man hält für 2 h am Rückfluss.
Das Gemisch wird auf Raumtemperatur abgekühlt. Man dosiert anschließend 3,31 g einer 30%-igen Natriummethylat Lösung in Methanol zu. Das Gemisch ist danach pH neutral.
Die flüchtigen Bestandteile werden bei 150°C und 10 mbar Unterdruck am Rotationsverdampfer vollständig entfernt. Der erhaltene Rückstand wird anschließend mit Xylol so verdünnt, dass eine 80%-ige Lösung in Xylol erhalten wird, d.h. die Zubereitung enthält 80% des Siliconharzes und 20% Xylol.
Man erhält eine klare, farblose Lösung

Der Restmethoxygehalt des Harzes beträgt 5,38 Gew.-%.
Per SEC (Eluent THF) wurden folgende Molekulargewichte bestimmt: Mw = 10482 g/mol, Mn = 1653 g/mol, Polydispersität PD = 6,34.

Nach ²⁹Si-NMR ist die molare Zusammensetzung:
Me₂Si(OMe)O_{1/2}: 0,7 %
Me₂SiO_{2/2}: 8,7 %
Me(OMe)₂SiO_{1/2}: 1,0 %
Me(OMe) SiO_{2/2}: 10,6 %
MeSiO_{3/2}: 22,3 %
Ph(OMe)₂SiO_{1/2}: 0,5 %
Ph(OMe)SiO_{2/2}: 27,6 %
PhSiO_{3/2}: 28,6 %

Die Lösung, die nach der Filtration erhalten wurde, erweist sich bei Lagerung im Trockenschrank über mehr als 4 Wochen bei 60°C viskositäts- und damit lagerstabil.

Auf einem Aluminiumpanel erhält man aus der erfindungsgemäßen finalen Harzlösung nach Auftragen mit einem 100 µm Rakel und Verdunsten des Lösemittels nach 1,2 h Stunden einen trockenen, klebfreien, glatten, glänzenden Film.

### Beispiel 2: Herstellung eines Siliconharzes nach dem erfindungsgemäßen zweistufigen Verfahren.

Im Unterschied zum ersten Beispiel wird die erste Stufe in diesem Beispiel nicht isoliert, sondern sofort im zweiten Schritt weiter umgesetzt.

In einer 60 l Glasapparatur mit Kühl- und Dosiereinrichtungen und Heizmantel werden unter Stickstoff 30672 g des Siliconharzintermediates SM 1 (Alkoxygehalt 14,2 Gew.-%,
Mw = 1430 g/mol) mit 3408 g des Siliconharzintermediates SM 2 (12,3 Gew.-% Alkoxygruppen, Mw = 1030 g/mol) und 14605 g Methanol gemischt. Man erhält eine klare, niederviskose Zubereitung.
Zu dieser Mischung werden 1314,6 g einer wässrigen Salzsäurelösung dosiert, die durch Vermischen von 69,6 g 20%-iger wässriger HCl-Lösung mit 1245 g vollentsalztem Wasser hergestellt wurde. Die Dosierung dieser wässrigen salzsauren Zubereitung dauert 10 min.
Das Gemisch wird trüb und erwärmt sich leicht, wobei die beobachtete Exothermie unter den gewählten Bedingungen 4,6°C beträgt, so dass die Endtemperatur nach Dosierung 27,5°C beträgt. Anschließend wird mit einer Heizrate von 40°C/h auf 80°C Manteltemperatur aufgeheizt.
Das Gemisch klart während des Aufheizens auf. Man legt nun innerhalb von 3 min ein Vakuum von 300 mbar an und beginnt mit dem Abdestillieren des entstehenden Methanols im Gemisch mit wenig Wasser. Innerhalb von 50 min werden 16,48 kg Destillat abgenommen. Das Destillat enthält 99% Methanol und 1% Wasser. Das entstandene Harz hat folgende Eigenschaften: Mw = 4871 g/mol, Mn = 1460 g/mol, PD = 3,34. Der Gehalt an siliziumgebundenen Methoxygruppen wird zu 7,01 Gew.-% bestimmt und beträgt damit noch die Hälfte des durchschnittlichen Methoxygehaltes der Ausgangsmischung der Siliconharzintermediates. Der Siliconharzgehalt der Lösung wurde nicht direkt analytisch bestimmt, kann allerdings aufgrund der Einwaagen und der vorliegenden analytischen Daten auf ca. 31690 g abgeschätzt werden.

Das Vakuum wird gebrochen, das Heizen eingestellt und anschließend 7860 g Xylol und 1252 g einer 50%-igen wässrigen Lösung von Trimethylolpropan zudosiert, d.h 626 g Trimethylolpropan, was 1,98 Gew.-% der berechneten Menge Harz aus dem ersten Schritt entspricht. Daraus berechnet sich ein Si-OR : COH-Verhältnis von 5,1:1.
Der HCl-Gehalt der Reaktionsmischung beträgt nach Xylolzugabe 140 ppm. Man dosiert 2370,82 g einer wässrigen Salzsäurelösung, die durch Vermischen von 25,82 g 20%-iger wässriger HCl-Lösung mit 2345 g vollentsalztem Wasser hergestellt wurde, innerhalb von 5 min zu.
Anschließend wird ein Vakuum von 100 mbar angelegt und eine Manteltemperatur von 100°C eingestellt. Unter diesen Bedingungen werden 4803 g Destillat aus Wasser, Methanol und Xylol abgenommen. Die Manteltemperatur wird auf 150°C erhöht und das Vakuum auf 20 mbar verbessert. Man nimmt innerhalb von 45 min weitere 7390 g Destillat aus Xylol neben wenig Methanol ab. Das Heizen wird eingestellt und 7600 g Xylol zugegeben. Man erhält 38,6 kg einer 80,5%-igen klaren, farblosen Harzlösung in Xylol.

Der Restmethoxygehalt des Harzes beträgt 6,10 Gew.-%.

Per SEC (Eluent THF) wurden folgende Molekulargewichte bestimmt: Mw = 12495 g/mol, Mn = 1870 g/mol, Polydispersität PD = 6,68.

Nach ²⁹Si-NMR ist die molare Zusammensetzung:

| | |
|---|---|
| Me₂Si(OMe)O_{1/2}: | 0,6 % |
| Me₂SiO_{2/2}: | 9,2 % |
| Me(OMe)₂SiO_{1/2}: | 1,1 % |
| Me(OMe)SiO_{2/2}: | 11,4 % |
| MeSiO_{3/2}: | 25,4 % |
| Ph(OMe)₂SiO_{1/2}: | 0,3 % |
| Ph(OMe)SiO_{2/2}: | 29,7 % |
| PhSiO_{3/2}: | 22,3 % |

Die Lösung erweist sich nach Zugabe von 1000 ppm epoxidiertem Sojabohnenöl (zu beziehen unter der Bezeichnung DRAPEX 39 von Fa. Galata Chemicals, 68623 Lampertheim, Deutschland) auf die enthaltene Menge Siliconharz bei Lagerung im Trockenschrank über mehr als 4 Wochen bei 60°C stabil.

Auf einem Aluminiumpanel erhält man aus der erfindungsgemäßen finalen Harzlösung nach Auftragen mit einem 100 µm Rakel und Verdunsten des Lösemittels nach 1,0 h Stunden einen trockenen, klebfreien, glatten glänzenden Film.

### Beispiel 3: Herstellung eines Siliconharzes nach dem erfindungsgemäßen zweistufigen Verfahren.

Im Unterschied zu Beispiel 1 wird die erste Stufe nicht isoliert und hier eine besonders robuste Verfahrensweise gewählt, die sich in besonderer Weise für Maßstabsvergrößerungen eignet.

### Erste Stufe:

In einem 2 l Vierhalskolben mit Rückflusskühler und Tropftrichter werden unter Stickstoff 882,0 g des Siliconharzintermediates SM 1 (Alkoxygehalt 14,2 Gew.-%, Mw = 1430 g/mol) mit 98,0 g des Siliconharzintermediates SM 2 (12,3 Gew.-% Alkoxygruppen, Mw = 1030 g/mol) und 420,0 g Methanol gemischt. Man erhält eine klare, niederviskose Zubereitung.
Zu dieser Mischung werden 32,0 g einer wässrigen Salzsäurelösung dosiert, die durch Vermischen von 2,0 g 20%-iger wässriger HCl-Lösung mit 30,0 g vollentsalztem Wasser hergestellt wurde. Die Dosierung dieser wässrigen salzsauren Zubereitung dauert 10 min.
Das Gemisch wird trüb und erwärmt sich leicht, wobei die beobachtete Exothermie unter den gewählten Bedingungen 4°C beträgt, so dass die Endtemperatur nach Dosierung 25°C beträgt. Anschließend wird bei Normaldruck von 1013 mbar mit einer Heizrate von 40°C/h aufgeheizt, jedoch nicht refluxiert, sondern es wird sofort damit begonnen Destillat abzunehmen (Reaktivdestillation).
Das Gemisch klart während des Aufheizens auf. Man destilliert bis eine Innentemperatur von 120°C erreicht wurde (3,5 h).
Man erhält 503,3 g Destillat, das im Wesentlichen aus Methanol (99 Gew.-%) und Wasser besteht. Dieses Destillat kann bei Folgeansätzen ohne weitere Aufarbeitung wieder eingesetzt werden. Die enthaltene Menge Wasser ist in der Ansatzberechnung zu berücksichtigen.

Das Siliconharz der ersten Stufe enthält 5,98 Gew.-% Methoxygruppen (MeO- mit Molekulargewicht 31 g/mol), so dass in den erhaltenen 896,3 g Siliconharz 83,69 g bzw. 2,7 mol Methoxygruppen vorhanden sind.

### Zweite Stufe:

Zu dem Destillationsrückstand der ersten Stufe werden 226 g Xylol, 2,0 g 20%-ige wässrige Salzsäurelösung und 22,5 g einer Lösung von 80 Gew.-% Trimethylolpropan in Wasser zudosiert (= 0,13 mol Trimethylolpropan), entsprechend 2 Gew.-% Trimethylolpropan, bezogen auf das Siliconharz. 0,13 mol Trimethylolpropan entspricht 0,39 mol Hydroxygruppen, so dass ein molares Si-OMe : COH-Verhältnis von 7,0:1 vorliegt.

Während der Zugabe wird nicht geheizt. Die Innentemperatur sinkt auf 70°C ab. Anschließend erhitzt man 1 h auf Rückfluss (Ölbadtemperatur 160°C). Nach einer Stunde beginnt man mit der Abnahme von Destillat, wobei der Druck im Reaktionsgefäß vorsichtig von 1013 mbar auf 20 mbar reduziert wird. Nach 30 min hat man 252,9 g Destillat erhalten.
Zum Destillat gibt man 40 g einer 25 Gew.-% igen Solelösung, um die Phasentrennung zu verbessern. Danach werden die Phasen getrennt. Die organische Phase besteht im Wesentlichen aus Xylol (98,1 Gew.-%) neben wenig Methanol und Wasser und kann unverändert wieder eingesetzt werden. Die geringen Mengen Wasser und Methanol sind bei Berechnung der Folgeansätze zu berücksichtigen.
Man kühlt den Destillationsrückstand auf 60°C ab und gibt 108 g Xylol zu, um einen Festgehalt von 80 Gew.-% einzustellen.

Der Restmethoxygehalt des Harzes beträgt 4,79 Gew.-%.
Per SEC (Eluent THF) wurden folgende Molekulargewichte bestimmt: Mw = 17161 g/mol, Mn = 2080 g/mol, Polydispersität PD = 8,3.
Es ist kein freies Trimethylolpropan nachweisbar. Im Harz gebunden werden 1,89 Gew.-% gefunden.

Nach ²⁹Si-NMR ist die molare Zusammensetzung:
Me₂Si(OMe)O_{1/2}: 0,5 %
Me₂SiO_{2/2}: 9,1 %
Me(OMe)₂SiO_{1/2}: 0,2 %
Me(OMe)SiO_{2/2}: 9,4 %
MeSiO_{3/2}: 25,7 %
Ph(OMe)₂SiO_{1/2}: 0,7 %
Ph(OMe)SiO_{2/2}: 27,2 %
PhSiO_{3/2}: 27,2 %

Die Lösung, die nach der Filtration erhalten wurde, erweist sich bei Lagerung im Trockenschrank über mehr als 4 Wochen bei 60°C stabil.

Auf einem Aluminiumpanel erhält man aus der erfindungsgemäßen finalen Harzlösung nach Auftragen mit einem 100 µm Rakel und Verdunsten des Lösemittels nach 1,2 h Stunden einen trockenen, klebfreien glatten glänzenden Film.

### Vergleichsbeispiel 1: Harzsynthese gemäß Beispiel 1 von US 4,749,764 A

Da für die die Synthese der Vorstufe von Beispiel 1 in US 4,749,764 A keine Vorschrift angegeben ist und nur allgemein auf den Stand der Technik verwiesen wird, wurde eine Synthesevorschrift nach Ständen der Technik dafür abgeleitet, die zur Zeit der Entstehung von US 4,749,764 A bereits bekannt waren. Beispielhaft sei hier auf DE854708, GB1192506, DE953661, US2758124, und DE2415331 verwiesen.

Die Herstellung umfasst die Schritte Teilalkoxylierung, Hydrolyse und Kondensation, sowie die Aufarbeitung durch wässrige Waschungen in Gegenwart eines inerten aromatischen Lösemittels:
In einen 4 l Vierhalskolben mit Tropftrichter und Rückflusskühler werden 745 g (3,52 mol) Phenyltrichlorsilan und 144,9 g Dimethyldichlorsilan (1,12 mol) eingewogen.
Innerhalb von 50 Minuten werden bei Raumtemperatur von 23°C 369,6 g Methanol zudosiert. Dabei sinkt die Temperatur durch das Ausgasen von Salzsäuregas zunächst auf -5,7°C ab und steigt dann im weiteren Verlauf auf 16°C an, der Endtemperatur nach vollendeter Methanolzugabe. Das Gemisch wird anschließend auf 60°C aufgeheizt und 15 min bei dieser Temperatur gerührt. Bei 60°C werden 60 g Wasser innerhalb von 60 min zugetropft, wobei die Temperatur auf 69,1°C steigt und das Gemisch trüb wird. Man stellt die Heizung ab, lässt unter Rühren innerhalb von 20 min auf 45°C abkühlen und dosiert bei dieser Temperatur innerhalb von 6 min 45,5 g Trimethylchlorsilan (0,42 mol) zu. Man erwärmt für 2 h auf 67,3°C, was Rückflusstemperatur entspricht. Man dosiert 660 g Xylol, 660 g Wasser und 200 g 30%-ige wässrige NaCl Lösung zu, heizt auf 60°C auf und rührt für 10 min. Der Rührer wird abgestellt und man lässt bei abgestellter Heizung 30 min lang die Phasen trennen.
Die untere Phase (Sauerwasser) wird abgetrennt. Man wiederholt den Waschvorgang dreimal mit jeweils 750 ml Wasser jeweils bei 60°C und 30 min Phasentrennung wie eben beschrieben. Nach dem dritten Waschgang ist der Rest-HCl-Gehalt auf 5 ppm gesunken. Die organische Phase wird am Rotationsverdampfer bei 80°C und 10 mbar Vakuum ausgeheizt, bis kein Destillat mehr erhalten wird.

Das erhaltene Harz besitzt einen Anteil an siliziumgebundenen Methoxygruppen von 7,43 Gew.-%. Mw = 1480 g/mol, Mn = 944 g/mol, PD = 1,57.

Nach ²⁹Si-NMR ist die molare Zusammensetzung:

| | |
|---|---|
| Me₃SiO_{1/2}: | 4,0 % |
| Me₂Si(OMe)O_{1/2}: | 2,6 % |
| Me₂SiO_{2/2} : | 17,2 % |
| Ph(OMe)₂SiO_{1/2}: | 8,8 % |
| Ph(OMe)SiO_{2/2}: | 42,0 % |
| PhSiO_{3/2} : | 25,4 % |

312,5 g dieses Vorproduktes werden mit 15,98 g Trimethylolpropan, 3,7 g Ethylenglykol, 0,5 g 10%-iger xylolischer Lösung von Butyltitanat und 187,5 g Xylol in einem 2 l Vierhalskolben mit Tropftrichter und Rückflusskühler vorgelegt und unter Rühren auf 150°C Heizbadtemperatur aufgeheizt. Man erhält ab 77°C erstes Destillat aus Methanol und Xylol. Die Reaktion wird solange fortgesetzt, bis 38% des siliziumgebundenen Methanols abdestilliert wurden. Die Reaktionszeit betrug insgesamt 5 h bei 150°C Heizbadtemperatur. Die Reaktion wird durch Abkühlen und Zugabe von weiteren 140 g Xylol abgebrochen. Man erhält eine 50%-ige xylolische Lösung. Die Viskosität der Lösung beträgt bei 25°C 76 cSt.

Das erhaltene Harz besitzt einen Anteil an siliziumgebundenen Methoxygruppen von 4,52 Gew.-%. Bezogen auf die Anfangsmenge von 7,43 Gew.-% Methoxygruppen, sind dies 60,83%, die erhalten geblieben sind, bzw. eines Umsetzungsrate bezogen auf Methoxygruppen von 39,17%. Mw = 4003 g/mol, Mn = 1692 g/mol, PD = 2,37.

Nach ²⁹Si-NMR ist die molare Zusammensetzung:

| | |
|---|---|
| Me₃SiO_{1/2}: | 4,1 % |
| Me₂Si(OMe)O_{1/2}: | 0,6 % |
| Me₂SiO_{2/2}: | 18,9 % |
| Ph(OMe)₂SiO_{1/2} : | 0,7 % |
| Ph(OMe)SiO_{2/2}: | 34,8 % |
| PhSiO_{3/2}: | 40,9 % |

Die Lösung, die nach der Filtration erhalten wurde, erweist sich bei Lagerung im Trockenschrank bei 50°C als viskositätsstabil, wie dies in EP 0006432 bereits beschrieben ist.

Auf einem Aluminiumpanel erhält man aus der frischen Harzlösung nach Auftragen mit einem 100 µm Rakel und Verdunsten des Lösemittels einen klebrigen Film. Nach 24 Stunden ist der Film noch immer nicht klebfrei. Eine klebfreie Oberfläche wird erst nach 35 Stunden erhalten. Der Film weist eine unebene Oberflächenstruktur aus, die auf Verlaufsstörungen zurückzuführen ist.

## Patentansprüche

1. Verfahren zur Herstellung von vernetzbaren Siliconharzen, indem in einem ersten Schritt
ein Gemisch aus mindestens zwei verschiedenen Siliconharzintermediaten (A), die Si-gebundene Alkoxygruppen- und ggf. Hydroxygruppen aufweisen, aus Wiederholungseinheiten der Formel (1)
RₐSi(OR¹)_{b}O_{(4-a-b)/2} (1),
wobei
R gleich oder verschieden ist und einen einwertigen, SiC-gebundenen, gegebenenfalls substituierten C₁-C₂₀ Kohlenwasserstoffrest bedeutet,
R¹ gleich oder verschieden ist und ein Wasserstoffatom oder einen Rest R² bedeutet,
R² gleich oder verschiedenen ist und einen C₁-C₆-Alkylrest bedeutet,
a und b jeweils eine Zahl im Werte von 0, 1, 2 oder 3 je Wiederholungseinheit haben, mit der Maßgabe, dass die Summe a + b ≤ 3 ist und
a in mindestens 30 % aller Wiederholungseinheiten der Formel (1) den Wert 1 besitzt und a über alle Wiederholungseinheiten der Formel (1) gemittelt durchschnittlich einen Wert von 0,9 bis 1,9 besitzt und
b über alle Wiederholungseinheiten der allgemeinen Formel (1) gemittelt einen durchschnittlichen Wert von 0,1 bis 1,8, besitzt,
wobei die Siliconharzintermediate (A) höchstens 10 Gew.-% Si-gebundene Hydroxylgruppen enthalten, und
wobei die Siliconharzintermediate ein Molekulargewicht M_{w} von 600 bis 2.500 g/mol aufweisen,
miteinander in Gegenwart von Wasser (B),
einer der Mischung Azidität verleihenden Menge eines sauren Katalysators (C) und
ggf. eines Alkohols (D) der Formel R²OH, wobei R² die oben dafür angegebene Bedeutung hat, als Lösemittel durch Hydrolyse und Kondensation soweit umgesetzt werden, dass die Menge an ursprünglich vorhandenen Gruppen -OR¹ um mindestens 5 % reduziert wird, und der entstehende Alkohol aus dem Reaktionsgemisch vorzugsweise abdestilliert wird, wobei
Siliconharze (E) aus Wiederholungseinheiten der Formel (2)
R_{c}Si(OR¹)_{d}O_{(4-c-d)/2} (2),
erhalten werden, wobei
R und R¹ die oben dafür angegebene Bedeutung haben und
c und d jeweils eine Zahl im Werte von 0, 1, 2 oder 3 je Wiederholungseinheit haben, mit der Maßgabe, dass die Summe c + d ≤ 3 ist und
c in mindestens 30 % aller Wiederholungseinheiten der Formel (1) den Wert 1 besitzt und c über alle Wiederholungseinheiten der Formel (1) gemittelt durchschnittlich einen Wert von 0,9 bis 1,9 besitzt und
d über alle Wiederholungseinheiten der allgemeinen Formel (1) gemittelt einen durchschnittlichen Wert von 0,05 bis 1,0, besitzt,
wobei die Siliconharze (E) höchstens 7 Gew.-% Si-gebundene Hydroxylgruppen enthalten, und
wobei die Siliconharze (E) ein Molekulargewicht M_{w} von mehr als 2.500 g/mol und höchstens 10.000 g/mol aufweisen, mit der Maßgabe, dass Siliconharze (E) mindestens das 1,5-fache des Molekulargewichtes M_{w} der Siliconharzintermediate (A) aufweisen,
und in einem zweiten Schritt
die im ersten Schritt erhaltenen Siliconharze (E) mit mehrwertigen, mindestens drei C-gebundenen OH-Gruppen tragenden Alkoholen(F)
in Gegenwart von Wasser (G),
einer der Mischung Azidität verleihenden Menge eines sauren Katalysators (H) und
ggf. von inerten Lösungsmitteln (J) weiter aufkondensiert werden, und der entstehende Alkohol aus dem Reaktionsgemisch vorzugsweise abdestilliert wird,
mit der Maßgabe, dass die harzgebundenen Alkoxygruppen (Si-OR¹) in (E) gegenüber den kohlenstoffgebundenen OH-Gruppen (COH) in (F) im überstöchiometrischen Verhältnis von Si-OR¹ : COH von mindestens 2,0 : 1 vorliegen und wobei
Siliconharze (K) erhalten werden, die ein Molekulargewicht M_{w} von 5,000 g/mol bis 50,000 g/mol aufweisen, mit der Maßgabe, dass die Siliconharze (K) mindestens das 1,2-fache des Molekulargewichtes M_{w} der Siliconharze (E) aus dem ersten Verfahrensschritt aufweisen,
wobei das Molekulargewicht Mw (Gewichtsmittel) jeweils durch Gelpermeationschromatographie bestimmt wird, und wobei im Siliconharz (K) 0,01 - 3 Gew.-% aller Reste Si-O-gebundene Reste sind, die von dem mehrwertigen Alkohol (F) in gebundener Form stammen,
3 - 10 Gew.-% aller Si-gebundenen Reste im Siliconharz (K) einen Rest -OR² bedeuten, wobei R² einen C₁-C₆-Alkylrest bedeutet, und
wobei die Siliconharze (K) höchstens 5 Gew.-% Hydroxylgruppen enthalten,
wobei Molekulargewicht M_{w} gemäß der in der Beschreibung angegebenen Methode bestimmt wird.

2. Verfahren nach Anspruch 1, **dadurch gekennzeichnet, dass** R ein Methyl- oder Phenylrest ist.

3. Verfahren nach Anspruch 1 oder 2, **dadurch gekennzeichnet, dass** R² ein Methylrest ist.

4. Verfahren nach Anspruch 1, 2 oder 3, **dadurch gekennzeichnet, dass** als mehrwertige Alkohole (F) Alkohole mit drei bis vier C-gebundenen OH-Gruppen, vorzugsweise drei C-gebundenen OH-Gruppen, eingesetzt werden.

5. Verfahren nach einem der Ansprüche 1 bis 4, **dadurch gekennzeichnet, dass** als mehrwertige, mindestens drei C-gebundene OH-Gruppen tragende Alkohole (F) solche der Formel
R³(-OH)ₓ
eingesetzt werden, wobei R³ einen drei- bis mehrwertigen Kohlenwasserstoffrest mit 5 bis 25 C-Atomen, der ggf. durch Heteroatome, vorzugsweise Sauerstoffatome und Carbonylgruppen, unterbrochen ist,
x eine ganze Zahl von 3 bis 20, vorzugsweise 3 bis 4, bevorzugt 3, ist.

6. Verfahren nach einem der Ansprüche 1 bis 5, **dadurch gekennzeichnet, dass** als mehrwertige, mindestens drei C-gebundene OH-Gruppen tragende Alkohole (F) Trimethylolethan, Trimethylolpropan, Ditrimethylolpropan oder Glycerin, bevorzugt Trimethylolethan eingesetzt werden.

7. Verfahren nach einem der Ansprüche 1 bis 6, **dadurch gekennzeichnet, dass** nach dem zweiten Verfahrensschritt Siliconharze (K) aus Wiederholungseinheiten der Formel (3):
R_{c}Si(OR⁴)_{d}O_{(4-c-d)/2} (3)
erhalten werden, wobei
R, c und d die im Anspruch 1 dafür angegebene Bedeutung haben,
R⁴ gleich oder verschieden ist und ein Rest R² ist, wobei R² ein C₁-C₆-Alkylrest ist, oder R⁴ ein einwertiger Rest R³' ist, wobei R³' von dem mehrwertigen, mindestens drei C-gebundene OH-Gruppen tragenden Alkohol (F) minus mindestens einer der OH-Gruppen stammt, wobei R³' vorzugsweise einen einwertigen Kohlenwasserstoffrest mit 5 bis 25 C-Atomen, der ggf. durch ein oder mehreren Heteroatomen, vorzugsweise Sauerstoffatome und Carbonylgruppen, unterbrochen ist und ggf. ein oder mehrere OH-Gruppen enthält, bedeutet, oder R⁴ einen verbrückenden Rest R³* bedeutet, wobei R³* zwei oder mehrere Wiederholungseinheiten der Formel (3) über zwei oder mehrere -OR⁴ Gruppen verbrückt und von dem mehrwertigen, mindestens drei C-gebundene OH-Gruppen tragenden Alkohol (F) minus mindestens zwei der OH-Gruppen stammt, wobei R³* vorzugsweise einen zwei- bis mehrwertigen Kohlenwasserstoffrest mit 5 bis 25 C-Atomen, der ggf. durch ein oder mehreren Heteroatome, vorzugsweise Sauerstoffatome und Carbonylgruppen, unterbrochen ist und der ggf. noch ein oder mehrere OH-Gruppen enthält, bedeutet,
mit der Maßgabe, dass im Siliconharz (K)
0,01 - 3 Gew.-% aller Reste Si-O-gebundene Reste R³' und R³* sind, die von dem mehrwertigen Alkohol in gebundener Form stammen,
3 - 10 Gew.-% aller Si-gebundenen Reste einen Rest -OR⁴ bedeuten, bei dem R⁴ einen C₁-C₆-Alkylrest R² bedeutet, und
höchstens 5 Gew.-% Si-gebundene Hydroxylgruppen enthalten sind.

8. Verfahren nach einem der Ansprüche 1 bis 7, **dadurch gekennzeichnet, dass** als Katalysatoren (C) und (H) HCl eingesetzt wird.

9. Verfahren nach einem der Ansprüche 1 bis 8, **dadurch gekennzeichnet, dass** als inerte Lösungsmittel (J) Xylole eingesetzt werden.

10. Verwendung der Siliconharze hergestellt gemäß einem der Ansprüche 1 bis 9 in korrosionsschützenden Zusammensetzungen.

11. Verwendung der Siliconharze hergestellt gemäß einem der Ansprüche 1 bis 9 in Zusammensetzungen für Beschichtungen zum Korrosionsschutz.

## Claims

1. Process for producing crosslinkable silicone resins, wherein in a first step
a mixture of at least two different silicone resin intermediates (A) comprising Si-bonded alkoxy groups and optionally hydroxyl groups and composed of repeating units of formula (1)
RₐSi(OR¹)_{b}O_{(4-a-b)/2} (1),
wherein
R is identical or different and represents a monovalent, SiC-bonded, optionally substituted C₁-C₂₀ hydrocarbon radical,
R¹ is identical or different and represents a hydrogen atom or a radical R²,
R² is identical or different and represents a C₁-C₆-alkyl radical,
a and b each have a value of 0, 1, 2 or 3 per repeating unit with the proviso that
the sum of a + b is ≤ 3 and
in at least 30% of all repeating units of formula (1) a has a value of 1 and averaged over all repeating units of formula (1) a has a midpoint value of 0.9 to 1.9 and
averaged over all repeating units of general formula (1) b has a midpoint value of 0.1 to 1.8,
wherein the silicone resin intermediates (A) contain not more than 10% by weight of Si-bonded hydroxyl groups and
wherein the silicone resin intermediates have a molecular weight M_{w} of 600 to 2500 g/mol,
are reacted with one another by hydrolysis and condensation in the presence of water (B),
an amount of an acidic catalyst (C) sufficient to impart acidity to the mixture and
optionally an alcohol (D) of formula R²OH, wherein R² is as defined hereinabove, as solvent to an extent such that the amount of originally present groups -OR¹ is reduced by at least 5% and the resulting alcohol is preferably removed from the reaction mixture by distillation to obtain
silicone resins (E) composed of repeating units of formula (2)
R_{c}Si(OR¹)_{d}O_{(4-c-d)/2} (2),
wherein
R and R¹ are as defined above and
c and d each have a value of 0, 1, 2 or 3 per repeating unit with the proviso that
the sum of c + d is ≤ 3 and
in at least 30% of all repeating units of formula (1) c has a value of 1 and averaged over all repeating units of formula (1) c has a midpoint value of 0.9 to 1.9 and
averaged over all repeating units of general formula (1) d has a midpoint value of 0.05 to 1.0,
wherein the silicone resins (E) contain not more than 7% by weight of Si-bonded hydroxyl groups and
wherein the silicone resins (E) have a molecular weight M_{w} of more than 2500 g/mol and not more than 10 000 g/mol with the proviso that silicone resins (E) have at least 1.5 times the molecular weight M_{w} of the silicone resin intermediates (A),
and in a second step
the silicone resins (E) obtained in the first step are subjected to further condensation with polyhydric alcohols (F) bearing at least three C-bonded OH groups
in the presence of water (G),
an amount of an acidic catalyst (H) sufficient to impart acidity to the mixture and
optionally of inert solvents (J) and the resulting alcohol is preferably removed from the reaction mixture by distillation,
with the proviso that compared to the carbon-bonded OH groups (COH) in (F) the resin-bonded alkoxy groups (Si-OR¹) in (E) are present in a superstoichiometric ratio of Si-OR¹ : COH of at least 2.0 : 1, to obtain
silicone resins (K) having a molecular weight M_{w} of 5000 g/mol to 50 000 g/mol with the proviso that the silicone resins (K) have at least 1.2 times the molecular weight M_{w} of the silicone resins (E) from the first process step,
wherein the molecular weight Mw (weight-average) is in each case determined by gel permeation chromatography and
wherein in the silicone resin (K) 0.01-3% by weight of all radicals are Si-O-bonded radicals derived from the polyhydric alcohol (F) in bonded form, 3-10% by weight of all Si-bonded radicals in the silicone resin (K) represent a radical -OR², wherein R² represents a C₁-C₆-alkyl radical and
wherein the silicone resins (K) contain not more than 5% by weight of hydroxyl groups, wherein molecular weight M_{w} is determined according to the method stated in the description.

2. Process according to Claim 1, **characterized in that** R is a methyl or phenyl radical.

3. Process according to Claim 1 or 2, **characterized in that** R² is a methyl radical.

4. Process according to Claim 1, 2 or 3, **characterized in that** the employed polyhydric alcohols (F) are alcohols having three to four C-bonded OH groups, preferably three C-bonded OH groups.

5. Process according to any of Claims 1 to 4, **characterized in that** the employed polyhydric alcohols (F) bearing at least three C-bonded OH groups are those of formula
R³(-OH)ₓ,
wherein R³ represents a trivalent to polyvalent hydrocarbon radical having 5 to 25 C atoms which is optionally interrupted by heteroatoms, preferably oxygen atoms and carbonyl groups,
x is an integer from 3 to 20, by preference 3 to 4, preferably 3.

6. Process according to any of Claims 1 to 5, **characterized in that** the employed polyhydric alcohols (F) bearing at least three C-bonded OH groups are trimethylolethane, trimethylolpropane, ditrimethylolpropane or glycerol, preferably trimethylolethane.

7. Process according to any of Claims 1 to 6, **characterized in that** obtained after the second process step are silicone resins (K) composed of repeating units of formula (3):
R_{c}Si(OR⁴)_{d}O_{(4-c-d)/2} (3)
wherein
R, c and d are as defined in Claim 1,
R⁴ is identical or different and is a radical R², wherein R² is a C₁-C₆-alkyl radical,
or R⁴ is a monovalent radical R³*'*, wherein R³*'* derives from the polyhydric alcohol (F) bearing at least three C-bonded OH groups minus at least one of the OH groups, wherein R³*'* preferably represents a monovalent hydrocarbon radical having 5 to 25 carbon atoms which is optionally interrupted by one or more heteroatoms, preferably oxygen atoms and carbonyl groups, and optionally contains one or more OH groups,
or R⁴ represents a bridging radical R³*, wherein R³* bridges two or more repeating units of formula (3) via two or more -OR⁴ groups and derives from the polyhydric alcohol (F) bearing at least three C-bonded OH groups minus at least two of the OH groups, wherein R³* preferably represents a divalent to polyvalent hydrocarbon radical having 5 to 25 carbon atoms which is optionally interrupted by one or more heteroatoms, preferably oxygen atoms and carbonyl groups, and which optionally also contains one or more OH groups,
with the proviso that in the silicone resin (K) 0.01-3% by weight of all radicals are Si-O-bonded radicals R³*'* and R³* derived from the polyhydric alcohol in bonded form,
3-10% by weight of all Si-bonded radicals represent a radical -OR⁴ , wherein R⁴ represents a C₁-C₆-alkyl radical R², and
not more than 5% by weight of Si-bonded hydroxyl groups are present.

8. Process according to any of Claims 1 to 7, **characterized in that** HCl is employed as the catalysts (C) and (H).

9. Process according to any of Claims 1 to 8, **characterized in that** xylenes are employed as the inert solvents (J).

10. Use of the silicone resins produced according to any of Claims 1 to 9 in corrosion-protective compositions.

11. Use of the silicone resins produced according to any of Claims 1 to 9 in compositions for coatings for corrosion protection.

## Revendications

1. Procédé pour la préparation de résines de silicone réticulables, dans lequel dans une première étape un mélange d'au moins deux intermédiaires (A) de résine de silicone différents, qui présentent des groupes alcoxy et éventuellement des groupes hydroxy liés à Si, composés de motifs répétitifs de formule (1)
RₐSi(OR¹)_{b}O_{(4-a-b)/2} (1),
R étant identique ou différent et signifiant un radical hydrocarboné monovalent lié par SiC, éventuellement substitué, en C₁₋₂₀,
R¹ étant identique ou différent et signifiant un atome d'hydrogène ou un radical R²,
R² étant identique ou différent et signifiant un radical C₁₋₆-alkyle,
a et b possédant à chaque fois un nombre valant 0, 1, 2 ou 3 par motif répétitif, étant entendu que la somme a + b ≤ 3 et
a dans au moins 30 % de tous les motifs répétitifs de formule (1) possédant la valeur 1, et a possédant une valeur moyenne, en moyenne sur tous les motifs répétitifs de formule (1), de 0,9 à 1,9 et
b possédant une valeur moyenne, en moyenne sur tous les motifs répétitifs de formule générale (1), de 0,1 à 1,8,
les intermédiaires (A) de résine de silicone contenant au plus 10 % en poids de groupes hydroxyle liés à Si, et
les intermédiaires de résine de silicone présentant un poids moléculaire M_{w} de 600 à 2500 g/mole,
ensemble en présence d'eau (B),
d'une quantité d'un catalyseur acide (C) conférant de l'acidité au mélange et
éventuellement d'un alcool (D) de formule R²OH, R² possédant la signification donnée ci-dessus pour celui-ci, en tant que solvant
est transformé par hydrolyse et condensation dans la mesure où,
la quantité de groupes -OR¹ présents à l'origine est réduite d'au moins 5 %, et l'alcool produit est préférentiellement distillé du mélange réactionnel,
des résines de silicone (E) composées de motifs répétitifs de formule (2)
R_{c}si(OR¹)_{d}O_{(4-c-d)/2} (2),
étant obtenus,
R et R¹ possédant la signification donnée ci-dessus pour ceux-ci et
c et d possédant à chaque fois un nombre valant 0, 1, 2 ou 3 par motif répétitif, étant entendu que la somme c + d ≤ 3 et
c dans au moins 30 % de tous les motifs répétitifs de formule (1) possédant la valeur 1, et c possédant une valeur moyenne, en moyenne sur tous les motifs répétitifs de formule (1), de 0,9 à 1,9 et
d possédant une valeur moyenne, en moyenne sur tous les motifs répétitifs de formule générale (1), de 0,05 à 1,0,
les résines de silicone (E) contenant au plus 7 % en poids de groupes hydroxyle liés à Si, et
les résines de silicone (E) présentant un poids moléculaire M_{w} de plus de 2500 g/mole et d'au plus 10 000 g/mole, étant entendu que les résines de silicone (E) présentent au moins 1,5 fois le poids moléculaire M_{w} des intermédiaires (A) de résine de silicone,
et dans une deuxième étape
les résines de silicone (E) obtenues dans la première étape
sont condensées plus avant avec des alcools (F) polyvalents, portant au moins trois groupes OH liés à C
en présence d'eau (G),
d'une quantité d'un catalyseur acide (H) conférant de l'acidité au mélange et
éventuellement de solvants inertes (J), et l'alcool obtenu est préférentiellement distillé du mélange réactionnel,
étant entendu que les groupes alcoxy liés à la résine (Si-OR¹) dans (E), par rapport aux groupes OH liés à carbone (COH) dans (F), sont présents en un rapport superstœchiométrique de Si-OR¹:COH d'au moins 2,0:1 et
des résines de silicone (K) étant obtenues, qui présentent un poids moléculaire M_{w} de 5000 g/mole à 50 000 g/mole, étant entendu que les résines de silicone (K) présentent au moins 1,2 fois le poids moléculaire M_{w} des résines de silicone (E) de la première étape de procédé,
le poids moléculaire Mw (moyenne en poids) étant déterminé à chaque fois par chromatographie à perméation de gel, et 0,01 à 3 % en poids de tous les radicaux dans la résine de silicone (K) étant des radicaux liés par Si-O, qui proviennent de l'alcool polyvalent (F) sous forme liée,
3 à 10 % en poids de tous les radicaux liés à Si dans la résine de silicone (K) signifiant un radical -OR², R² signifiant un radical C₁₋₆-alkyle, et
la résine de silicone (K) contenant au plus 5 % en poids de groupes hydroxyle,
le poids moléculaire M_{w} étant déterminé selon la méthode indiquée dans la description.

2. Procédé selon la revendication 1, **caractérisé en ce que** R est un radical méthyle ou phényle.

3. Procédé selon la revendication 1 ou 2, **caractérisé en ce que** R² est un radical méthyle.

4. Procédé selon la revendication 1, 2 ou 3, **caractérisé en ce qu'**en tant qu'alcools polyvalents (F), des alcools comportant trois à quatre groupes OH liés à C, de préférence trois groupes OH liés à C, sont utilisés.

5. Procédé selon l'une quelconque des revendications 1 à 4, **caractérisé en ce qu'**en tant qu'alcools polyvalents (F) portant au moins trois groupes OH liés à C, ceux de formule
R³(-OH)ₓ,
sont utilisés, R³ étant un radical hydrocarboné trivalent à polyvalent comportant 5 à 25 atomes de C, qui est éventuellement interrompu par des hétéroatomes, de préférence des atomes d'oxygène et des groupes carbonyle, x étant un nombre entier de 3 à 20, de préférence de 3 à 4, préférablement 3.

6. Procédé selon l'une quelconque des revendications 1 à 5, **caractérisé en ce qu'**en tant qu'alcools polyvalents (F) portant au moins trois groupes OH liés à C, le triméthyloléthane, le triméthylolpropane, le ditriméthylolpropane ou la glycérine, préférablement le triméthyloléthane est utilisé.

7. Procédé selon l'une quelconque des revendications 1 à 6, **caractérisé en ce qu'**après la deuxième étape de procédé, des résines de silicone (K) composées de motifs répétitifs de formule (3) :
R_{c}Si(OR⁴)_{d}O_{(1-c-d)/2} (3),
sont obtenues
R, c et d possédant la signification indiquée pour ceux-ci dans la revendication 1,
R⁴ étant identique ou différent et étant un radical R², R² étant un radical C₁₋₆-alkyle, ou R⁴ étant un radical monovalent R³*'* , R³*'* provenant de l'alcool (F) polyvalent portant au moins trois groupes OH liés à C moins au moins un des groupes OH, R³*'* signifiant de préférence un radical hydrocarboné monovalent comportant 5 à 25 atomes de C, qui est éventuellement interrompu par un ou plusieurs hétéroatomes, de préférence des atomes d'oxygène et des groupes carbonyle et contient éventuellement un ou plusieurs groupes OH,
ou R⁴ signifiant un radical pontant R³*, R³* pontant deux motifs répétitifs de formule (3) ou plus par l'intermédiaire de deux groupes -OR⁴ ou plus et provenant de l'alcool (F) polyvalent portant au moins trois groupes OH liés à C moins au moins deux des groupes OH, R³* signifiant de préférence un radical hydrocarboné divalent à polyvalent comportant 5 à 25 atomes de C, qui est éventuellement interrompu par un ou plusieurs hétéroatomes, de préférence des atomes d'oxygène et des groupes carbonyle et contient éventuellement encore un ou plusieurs groupes OH,
étant entendu que dans la résine de silicone (K)
0,01 à 3 % en poids de tous les radicaux sont des radicaux R³*'* et R³* liés par Si-O, qui proviennent de l'alcool polyvalent sous forme liée,
3 à 10 % en poids de tous les radicaux liés à Si signifient un radical -OR⁴, dans lequel R⁴ signifie un radical C₁₋₆-alkyle R², et
au plus 5 % en poids des groupes hydroxyle liés à Si sont contenus.

8. Procédé selon l'une quelconque des revendications 1 à 7, **caractérisé en ce qu'**HCl est utilisé en tant que catalyseurs (C) et (H).

9. Procédé selon l'une quelconque des revendications 1 à 8, caractérisé en ce des xylènes sont utilisés en tant que solvants inertes (J).

10. Utilisation des résines de silicone préparées selon l'une quelconque des revendications 1 à 9 dans des compositions protectrices contre la corrosion.

11. Utilisation des résines de silicone préparées selon l'une quelconque des revendications 1 à 9 dans des compositions pour des revêtements pour la protection contre la corrosion.
